# EUROPEAN PATENT APPLICATION

(11) **EP 1 348 727 A2**
(43) Date of publication of application: **01.10.2003**
(21) Application number: 03251996.9
(22) Date of filing: 28.03.2003
(51) Int. Cl.: C08G 65/18, C08G 59/68, C08G 65/10, B41M 5/00, B41M 7/00

(54) **Image-receiving layer composition and overcoat layer composition for ink-jet recording**

(30) Priority: 29.03.2002 JP 2002093986; 29.03.2002 JP 2002093988
(71) Applicant: BROTHER KOGYO KABUSHIKI KAISHA, Nagoya-shi, Aichi-ken 467-8561 (JP)
(72) Inventor: Maeda, Minobu, Brother Kogyo Kabushiki Kaisha, Nagoya-shi, Aichi-ken 467-8561 (JP); Nishizaki, Masahiro, Brother Kogyo Kabushiki K., Nagoya-shi, Aichi-ken 467-8561 (JP)
(74) Representative: Smith, Samuel Leonard

(57) **Abstract**

An image-receiving layer composition is coated on a surface of a substrate of an ink-jet recording medium, used to form an image with the ink-jet system, to form an image-receiving layer. The composition includes an epoxy compound, an oxetane compound and a photo-cationic polymerization initiator. The composition is cured with an active energy beam. An image of an ink is formed on the image-receiving layer. Further, an overcoat layer is formed on the image. Also the ink and the overcoat layer may include an epoxy compound, an oxetane compound and a photo-cationic polymerization initiator.

## Description

### BACKGROUND OF THE INVENTION

### Field of the Invention:

The present invention relates to an image-receiving layer composition for ink-jet recording, an overcoat layer composition for ink-jet recording and an ink-jet recording medium.

### Description of the Related Art:

In the ink-jet system, ink droplets are formed by using an ink discharge method including, for example, the electrostatic attraction method; the method in which mechanical vibration or displacement is applied to the ink by using a piezoelectric element; and the method in which bubbles are generated by heating the ink to utilize the pressure generated thereby, and all or a part of the ink droplets are selectively landed onto an ink-jet recording medium such as paper to form an image thereby.

Those generally used as the ink to be employed for the ink-jet system as described above include those in which a variety of water-soluble dyes or pigments are dissolved or dispersed in solvent which is water or is comprised of water and water-soluble organic solvent. In order to form an image without a bleeding with these inks for ink-jet recording, it is necessary that the solvent, which is water or comprised of water and water-soluble organic solvent, swiftly permeates into the ink-jet recording medium or vaporizes.

However, when a resin material, such as polycarbonate, is used as the ink-jet recording medium, the solvent for the ink can not permeate into the ink-jet recording medium and stays on the surface thereof. As a result, the solvent is ununiformly dispersed to cause the bleeding. In recent years, the printing quality of the image obtained with the ink-jet system is rapidly improved, and a picture-like printing quality is required. Therefore, even with respect to the ink-jet recording medium such as paper having a high ink absorbability, a high printing quality with much less bleeding is required.

On the other hand, a development is being made for an ink for ink-jet recording comprising an active energy beam-curable composition which is polymerized and cured with an active energy beam such as ultraviolet light. Since the active energy beam-curable ink for ink-jet recording does not contain a solvent, there is no need to permeate the solvent into the ink-jet recording medium, and it is possible to swiftly cure the ink. Therefore, it is possible to obtain a high printing quality regardless of the material of ink-jet recording medium.

However, especially when polycarbonate is used as a substrate of the ink-jet recording medium, there are problems such that the active energy beam-curable ink for ink-jet recording has too poor adhesion to the polycarbonate to firmly fix the ink layer thereto. Further, the conventionally known active energy beam-curable composition has defects including the occurrence of the odor under high temperature, the production of volatile component(s) due to evaporation, and the pollution or taint due to the attachment of the component to the surrounding.

Further, when an image is formed by using the active energy beam-curable ink for ink-jet recording with the ink-jet recording system, the following problems arise the inferior moisture resistance or the peeling of ink layer due to the moisture. The formed ink has granularity which the ink-jet recording system inherently exhibits.

With respect to the above problems, there is a conventionally known technique in which an overcoat layer is formed, after the forming of the ink layer on the surface of the recording medium, to suppress the granularity in the printed article and to improve the moisture resistance. However, even by using an overcoat layer composition comprising the conventionally used radical polymerizable active energy beam-curable composition, problems are caused such as the occurrence of the ununiform color due to the insufficient moisture resistance, the occurrence of the odor from the printed article under high temperature, the production of the volatile component, due to evaporation, and the pollution or taint due to the attachment of the component to the surrounding.

### SUMMARY OF THE INVENTION

The present invention has been made in order to solve the problems of the conventional art as described above, a first object of which is to provide an image-receiving layer composition for forming an ink-jet recording image-receiving layer which firmly fixes the ink layer thereon without generating out-gas, which causes the occurrence of the odor and the attachment of volatile component to the surroundings even when being heated, and which can provide a printed article excellent in surface hardness, adhesive property and flexibility; a recording medium having the ink-jet recording image-receiving layer formed thereon; and a printed article comprising the recording medium on which a printing has been applied.

A second object of the present invention is to provide an overcoat layer composition which can reduce the granularity of a printed article printed with the ink-jet system which firmly fixes the ink layer thereon without generating out-gas which causes the occurrence of the odor and the attachment of the volatile component to the surroundings even when being heated, and which can provide a printed article excellent in moisture resistance, surface hardness, adhesive property and flexibility; and a printed article having the composition formed thereon as the overcoat layer.

According to a first aspect of the present invention, there is provided an image-receiving layer composition for forming an image-receiving layer on a substrate of a recording medium used to form an image by an ink-jet recording method, comprising:
an epoxy compound;
an oxetane compound; and
a photo-cationic polymerization initiator,
wherein the image-receiving layer composition is curable with an active energy beam.

In the image-receiving layer composition, the epoxy compound may be an alicyclic epoxy compound, and the oxetane compound may have two or more oxetane rings. In the image-receiving layer composition, the epoxy compound may be 3,4-epoxycyclohexylmethyl-3',4'-epoxycyclohexane carboxylate; the oxetane compound may be bis(3-ethyl-3-oxetanylmethyl) ether; and the photo-cationic polymerization initiator may be a mixture of triarylsulfonium hexafluorophosphate salts and propylene carbonate. A content of the photo-cationic polymerization initiator may be 1 part by weight to 12 parts by weight with respect to 100 parts by weight of a total content of the epoxy compound and the oxetane compound; and a content of the epoxy compound may be not less than 1 part by weight with respect to 100 parts by weight of the image-receiving layer composition.

In the present invention, there is also provided an ink-jet recording medium comprising a substrate and the image-receiving layer composition applied on a surface of the substrate. Further, in the present invention, there is also provided a printed article comprising the ink-jet recording medium; and an active energy beam curable ink which comprises an epoxy compound, an oxetane compound and a photo-cationic polymerization initiator, and which is applied on a surface of the recording medium. Furthermore, the printed article may be a printed article comprising an overcoat layer provided on the image-receiving layer having the ink applied thereon. The overcoat layer may be comprised of a composition which comprises an epoxy compound, an oxetane compound and a photo-cationic polymerization initiator, and which is curable with an active energy beam. The substrate may be formed of polycarbonate.

According to a second aspect of the present invention, there is provided an overcoat layer composition for forming an overcoat layer on an ink layer applied by an ink-jet recording method on a recording medium, comprising:
an epoxy compound;
an oxetane compound; and
a photo-cationic polymerization initiator,
wherein the overcoat layer is curable with an active energy beam.

In the overcoat layer composition, the epoxy compound may be an alicyclic epoxy compound, and the oxetane compound may have two or more oxetane rings. In the overcoat layer composition, the epoxy compound may be 3,4-epoxycyclohexylmethyl-3',4'-epoxycyclohexane carboxylate; the oxetane compound may be bis(3-ethyl-3-oxetanylmethyl)ether; and the photo-cationic polymerization initiator may be a mixture of triarylsulfonium hexafluorophosphate salts and propylene carbonate. In the overcoat layer composition, a content of the photo-cationic polymerization initiator may be 1 part by weight to 12 parts by weight with respect to 100 parts by weight of a total content of the epoxy compound and the oxetane compound; and a content of the epoxy compound may be more than 1 part by weight with respect to 100 parts by weight of the overcoat layer composition.

In the present invention, there are also provided a printed article comprising a recording medium; an ink layer provided on a surface of the recording medium; and the overcoat layer composition according to the second aspect of the present invention, which has been applied on a surface of the ink layer.

### BRIEF DESCRIPTION OF THE DRAWINGS

An embodiment of the invention will be described in detail with reference to the following figures wherein:
FIG. 1A is a plan view of a color ink jet printer used in an embodiment of the invention;
FIG. 1B is a front view of the color ink jet printer used in the embodiment;
FIG. 2 is a schematic block diagram showing a control system of the ink jet printer used in the embodiment; and
FIG. 3 is a flowchart of control processing to be executed in the ink jet printer used in the embodiment.

### DESCRIPTION OF THE PREFERRED EMBODIMENTS

The present invention will be explained in detail below. The image-receiving layer composition or the overcoat layer composition of the present invention contains an epoxy compound. Although the epoxy compound used for the image-receiving layer composition or the overcoat layer composition of the present invention is not specifically limited, alicyclic epoxy compound, for example, is preferably used. By containing the alicyclic epoxy compound, the ink-jet recording image-receiving layer obtained from the image-receiving layer composition or the overcoat layer obtained from the overcoat layer composition of the present invention has an excellent adhesive property to a substrate or an ink, and an excellent crosslinking degree. Thus, it is possible to effectively prevent the occurrence of the odor under high temperature and the attachment of the volatile component to the surroundings.

The alicyclic epoxy compound is not specifically limited, including, for example, 3,4-epoxycyclohexylmethyl-3',4'-epoxycyclohexane carboxylate, 2-(3,4-epoxycyclohexyl-5,5-spiro-3,4-epoxy)cyclohexane-meta-dioxane, bis(3,4-epoxycyclohexylmethyl)adipate, vinylcyclohexene oxide, 4-vinylepoxycyclohexane, bis(3,4-epoxy-6-methylcyclohexylmethyl)adipate, 3,4-epoxy-6-methylcyclohexyl-3',4'-epoxy-6'-methylcyclohexane carboxylate, methylenebis(3,4-epoxycyclohexane), dicyclopentadiene diepoxide, di(3,4-epoxycyclohexylmethyl) ether of ethylene glycol, ethylenebis(3,4-epoxycyclohexane carboxylate), epoxydized tetrabenzyl alcohol, lactone modified 3,4-epoxycyclohexylmethyl-3',4'-epoxycyclohexane carboxylate, limonene dioxide and limonene monooxide. Among them, the epoxy compound having two or more alicyclic epoxy groups in one molecule, including, for example, 3,4-epoxycyclohexylmethyl-3',4'-epoxycyclohexane carboxylate and bis(3,4-epoxycyclohexylmethyl)adipate, limonene dioxide and limonene monooxide, is more preferred, and 3,4-epoxycyclohexylmethyl-3',4'-epoxycyclohexane carboxylate is much more preferred.

Commercially available products of the alicyclic epoxy compound may exempliefied, for example, by UVR-6100, UVR-6105, UVR-6110, and UVR-6128 (all produced by Union Carbide Corporation), Celloxide 2021, Celloxide 2021P, and Celloxide 2021A (all produced by Daicel Chemical Industries, Ltd.).

The purity of the epoxy compound, used for the image-receiving layer composition or the overcoat layer composition of the present invention, is preferably 100%. After the diligent investigations performed by the present inventors, it has been found out that the odor generated by the conventional active energy beam-curable composition under high temperature and the attachment of volatile component to the surroundings, is caused by the impurities contained in the epoxy compound used as the raw material. Since the purity of the epoxy compound used as the raw material is 100%, the image-receiving layer composition or the overcoat layer composition of the present invention does not generate a secondary product which is out-gas produced by a reaction with additive or additives, thus preventing the occurrence of the odor and the attachment of the volatile component to the surroundings. Of course, the purity of the epoxy compound used as the raw material is not necessarily to be 100%, and in the curing process of the composition, the purity may be less than 100 % so long as the characteristics and performance required by the image-receiving layer composition or the overcoat layer composition, the recording medium having the composition formed thereon, and the printed article which comprises the recording medium having a printing applied of the present invention are satisfied. In practice, it is preferable to intentionally exclude from the epoxy compound a compound, such as diluent, which would generate a secondary product during the curing process or which would becomes the volatile component. The epoxy compound, used for the image-receiving layer composition or the overcoat layer composition of the present invention, may be used singly. Alternatively, two or more species of the compounds as described above may be used in combination. In either case, the epoxy compound may be comprised of epoxy-based component which effectively provide a desired resulting product without inhibiting the required performance or characteristics even when a secondary product is generated in the curing process.

The content of the epoxy compound, used for the image-receiving layer composition or the overcoat layer composition of the present invention, is preferably not less than 1 part by weight with respect to 100 parts by weight of the composition. If the content of the epoxy compound is less than 1 part by weight, crosslinking density may become insufficient to sufficiently cure the composition when irradiated with an active energy beam.

The image-receiving layer composition or the overcoat layer composition of the present invention comprises an oxetane compound. The oxetane compound, used for the image-receiving layer composition or the overcoat layer composition of the present invention, is not specifically limited and may include an oxetane compound having one or more oxetane ring or oxetane rings, but preferably has two or more oxetane rings. In the specification, an oxetane compound means a compound having one or more oxetane ring or oxetane rings represented by the following formula (1). The oxetane compound as described above causes the polymerization reaction and the crosslinking reaction by being irradiated with light in the presence of the photo-cationic polymerization initiator.

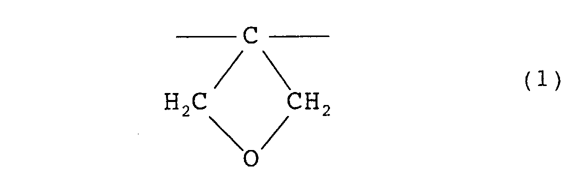

The compound having one oxetane ring is not specifically limited and may be the compound represented by the following general formula (2).

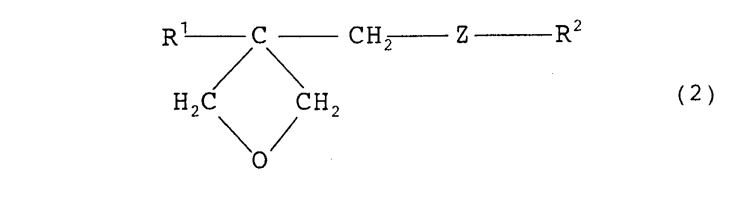

In the general formula (2), Z represents oxygen atom or sulfur atom. R¹ represents hydrogen atom; fluorine atom; alkyl group having a number of carbon atom or carbon atoms of 1 to 6 such as methyl group, ethyl group, propyl group, and butyl group; fluoroalkyl group having a number of carbon atom or carbon atoms of 1 to 6 such as trifluoromethyl group, perfluoroethyl group, and perfluoropropyl group; aryl group having a number of carbon atoms of 6 to 18 such as phenyl group and naphthyl group; furyl group; and thienyl group. R² represents, for example, hydrogen atom; alkyl group having a number of carbon atom or carbon atoms of 1 to 6 such as methyl group, ethyl group, propyl group, and butyl group; alkenyl group having a number of carbon atoms of 2 to 6 such as 1-propenyl group, 2-propenyl group, 2-methyl-1-propenyl group, 2-methyl-2-propenyl group, 1-butenyl group, 2-butenyl group, and 3-butenyl group; aryl group having a number of carbon atoms of 6 to 18 such as phenyl group, naphthyl group, anthranyl group, and phenanthryl group; substituted or unsubstituted aralkyl group having a number of carbon atoms of 7 to 18 such as benzyl group, fluorobenzyl group, methoxybenzyl group, fenetyl group, styryl group, cinnamyl group, and ethoxybenzyl group; group having another aromatic ring such as aryloxyalkyl including, for example, phenoxymethyl group and phenoxyethyl group; alkylcarbonyl group having a number of carbon atoms of 2 to 6 such as ethylcarbonyl group, propylcarbonyl group, and butylcarbonyl group; alkoxycarbonyl group having a number of carbon atoms of 2 to 6 such as ethoxycarbonyl group, propoxycarbonyl group, and butoxycarbonyl group; and N-alkylcarbamoyl group having a number of carbon atoms of 2 to 6 such as ethylcarbamoyl group, propylcarbamoyl group, butylcarbamoyl group, and pentylcarbamoyl group.

The compound having one oxetane ring may be exemplified, for example, by 3-ethyl-3-hydroxymethyloxetane, 3-(meta)allyloxymethyl-3-ethyloxetane, (3-ethyl-3-oxetanylmethoxy)methylbenzene, 4-fluoro-[1-(3-ethyl-3-oxetanylmethoxy)methyl]benzene, 4-methoxy-[1-(3-ethyl-3-oxetanylmethoxy)methyl]benzene, [1-(3-ethyl-3-oxetanylmethoxy)ethyl]phenyl ether, isobutoxymethyl(3-ethyl-3-oxetanylmethyl) ether, isobornyloxyethyl(3-ethyl-3-oxetanylmethyl) ether, isobornyl(3-ethyl-3-oxetanylmethyl) ether, 2-ethylhexyl(3-ethyl-3-oxetanylmethyl) ether, ethyldiethylene glycol (3-ethyl-3-oxetanylmethyl) ether, dicyclopentadiene(3-ethyl-3-oxetanylmethyl) ether, dicyclopentenyloxyethyl(3-ethyl-3-oxetanylmethyl) ether, dicyclopentenyl(3-ethyl-3-oxetanylmethyl) ether, tetrahydrofurfuryl(3-ethyl-3-oxetanylmethyl) ether, tetrabromophenyl(3-ethyl-3-oxetanylmethyl) ether, 2-tetrabromophenoxyethyl(3-ethyl-3-oxetanylmethyl) ether, tribromophenyl(3-ethyl-3-oxetanylmethyl) ether, 2-tribromophenoxyethyl(3-ethyl-3-oxetanylmethyl) ether, 2-hydroxyethyl(3-ethyl-3-oxetanylmethyl) ether, 2-hydroxypropyl(3-ethyl-3-oxetanylmethyl) ether, butoxyethyl(3-ethyl-3-oxetanylmethyl) ether, pentachlorophenyl(3-ethyl-3-oxetanylmethyl) ether, pentabromophenyl(3-ethyl-3-oxetanylmethyl) ether, and bornyl(3-ethyl-3-oxetanylmethyl) ether. The compound as described above may be used singly. Alternatively, two or more species of the compound may be used in combination.

The compound having two or more oxetane rings is not specifically limited and may be the compound represented by the following general formula (3), and may be the compounds having three or more oxetane rings represented by the following general formulas (8) and (15).

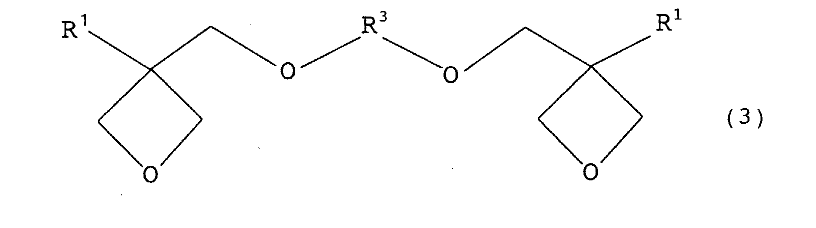

In the general formula (3), R¹ represents those as defined in the general formula (2) described above. R³ represents, for example, linear or branched alkylene group usually having a number of carbon atom or carbon atoms of 1 to 20 such as ethylene group, propylene group, and butylene group; linear or branched poly(alkyleneoxy) group usually having a number of carbon atom or carbon atoms of 1 to 120 such as poly(ethyleneoxy) group and poly(propyleneoxy) group; linear or branched unsaturated hydrocarbon group such as propenylene group, methylpropenylene group, and butenylene group; carbonyl group; alkylene group containing carbonyl group; alkylene group containing carboxyl group at intermediate position of molecular chain; and alkylene group containing carbamoyl group at intermediate position of molecular chain. Alternatively, R³ may be polyvalent group selected from groups represented by the following general formulas (4), (5), and (6).

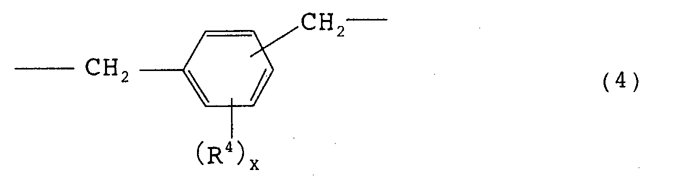

In the general formula (4), R⁴ represents hydrogen atom; alkyl group having a number of carbon atom or carbon atoms of 1 to 4 such as methyl group, ethyl group, propyl group, and butyl group; alkoxy group having a number of carbon atom or carbon atoms of 1 to 4 such as methoxy group, ethoxy group, propoxy group, and butoxy group; halogen atom such as chlorine atom and boron atom; nitro group; cyano group; mercapto group; lower alkylcarboxyl group; carboxyl group; or carbamoyl group. x represents an integer of 1 to 4.

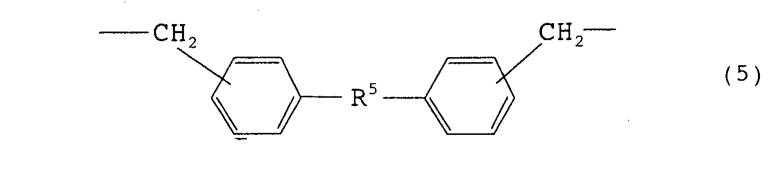

In the general formula (5), R⁵ represents oxygen atom, sulfur atom, methylene group, -NH-, -SO-, -SO₂-, - C(CF₃)₂-, or -C(CH₃)₂-.

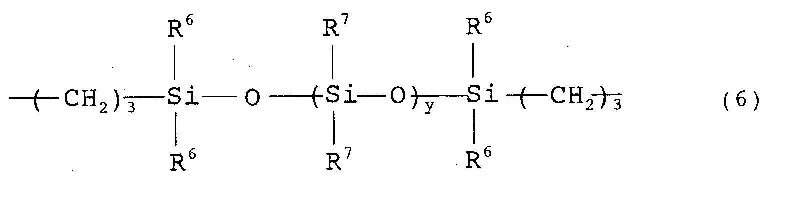

In the general formula (6), R⁶ represents alkyl group having a number of carbon atom or carbon atoms of 1 to 4 such as methyl group, ethyl group, propyl group, and butyl group; or aryl group having a number of carbon atoms of 6 to 18 such as phenyl group and naphthyl group. y is an integer of 0 to 200. R⁷ represents alkyl group having a number of carbon atom or carbon atoms of 1 to 4 such as methyl group, ethyl group, propyl group, and butyl group; or aryl group having a number of carbon atoms of 6 to 18 such as phenyl group and naphthyl group. R⁷ may be a group represented by the following general formula (7).

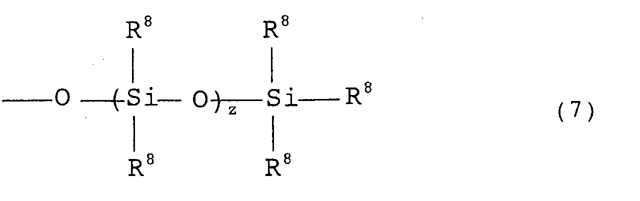

In the general formula (7), R⁸ represents alkyl group having a number of carbon atom or carbon atoms of 1 to 4 such as methyl group, ethyl group, propyl group, and butyl group; or aryl group having a number of carbon atoms of 6 to 18 such as phenyl group and naphthyl group. z is an integer of 0 to 100.

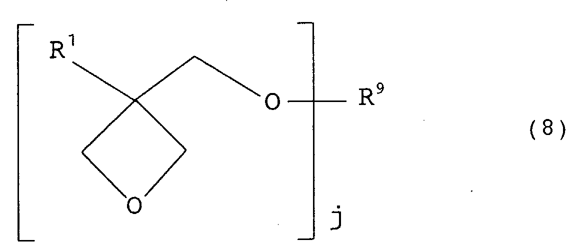

In the general formula (8), R¹ represents those as defined in the general formula (2) described above. R⁹ represents trivalent to decavalent organic groups including, for example, branched or linear alkylene group having a number of carbon atom or carbon atoms of 1 to 30 such as groups represented by the following formulas (9), (10) or (11), branched poly(alkyleneoxy) group such as groups represented by the following formula (12), and linear or branched polysiloxane-containing groups represented by the following formula (13) or (14). j represents an integer of 3 to 10 equal to the valency number of R⁹.

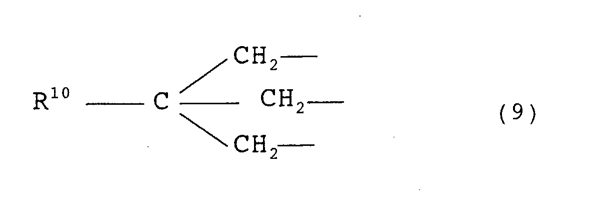

In the general formula (9), R¹⁰ represents alkyl group having a number of carbon atom or carbon atoms of 1 to 6 such as methyl group, ethyl group, propyl group.

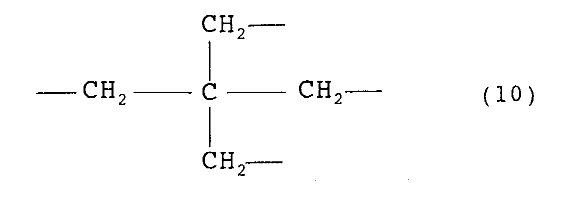

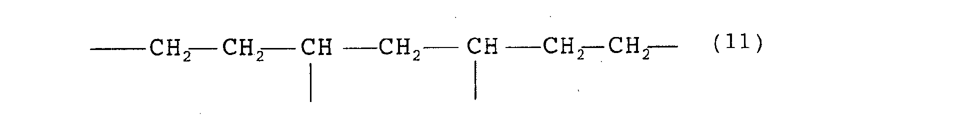

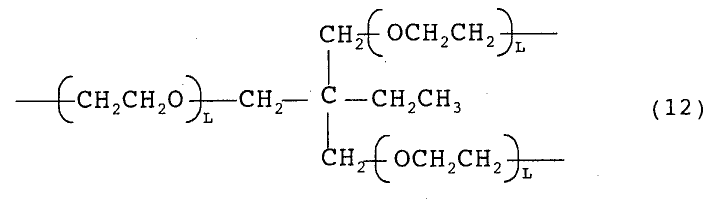

In the formula (12), L's are the same or different from each other, each of which is an integer of 1 to 10.

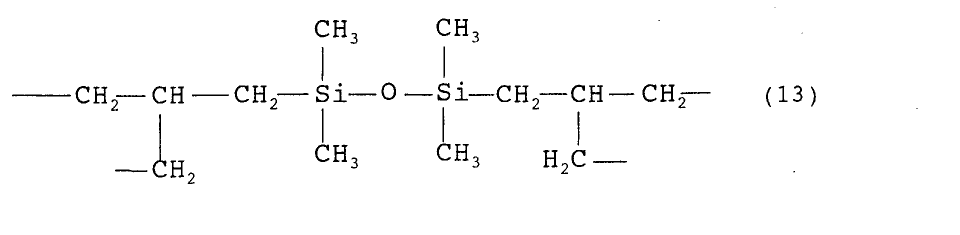

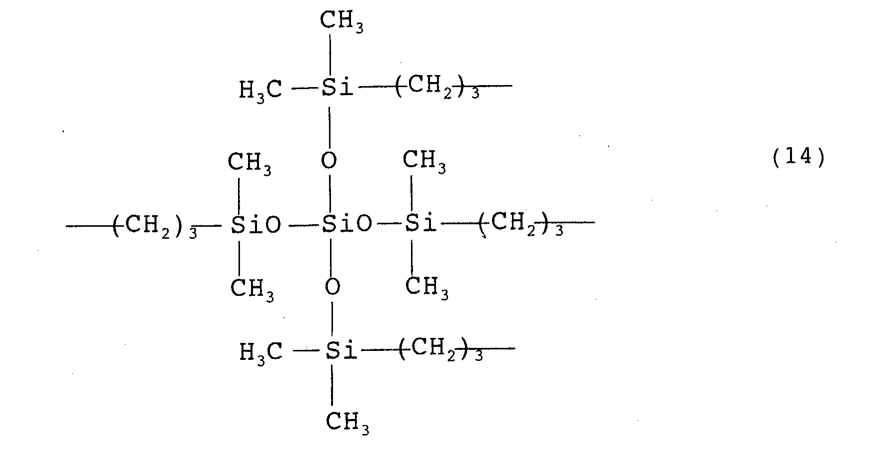

The compound represented by the following general formula (15) may have one to ten oxetane ring or oxetane rings.

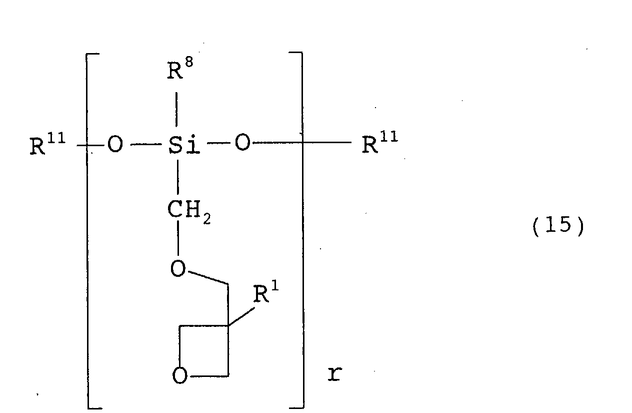

In the formula (15), R¹ represents those as defined in the general formula (2). R⁸ represents those as defined in the general formula (7). R¹¹ represents alkyl group having a number of carbon atom or carbon atoms of 1 to 4 such as methyl group, ethyl group, propyl group, and butyl group; or trialkylsilyl group (in this case, alkyl groups are the same or different from each other), including those having a number of carbon atoms of 3 to 12 such as trimethylsilyl group, triethylsilyl group, tripropylsilyl group, and tributylsilyl group, and r represents an integer of 1 to 10.

The compound having two or more oxetane ring or oxetane rings, for example, may be exemplified, for example, by bis(3-ethyl-3-oxetanylmethyl) ether, 3,7-bis(3-oxetanyl)-5-oxa-nonane, 3,3'-(1,3-(2-methylenyl)propanediylbis(oxymethylene))bis-(3-ethyloxetane), 1,4-bis[(3-ethyl-3-oxetanylmethoxy)methyl]benzene, 1,2-bis[(3-ethyl-3-oxetanylmethoxy)methyl]ethane, 1,3-bis[(3-ethyl-3-oxetanylmethoxy)methyl]propane, ethylene glycol bis(3-ethyl-3-oxetanylmethyl) ether, dicyclopentenylbis(3-ethyl-3-oxetanylmethyl) ether, triethylene glycol bis(3-ethyl-3-oxetanylmethyl) ether, tetraethylene glycol bis(3-ethyl-3-oxetanylmethyl) ether, tricyclodecanediyldimethylene(3-ethyl-3-oxetanylmethyl) ether, trimethylolpropane tris(3-ethyl-3-oxetanylmethyl) ether, 1,4-bis(3-ethyl-3-oxetanylmethoxy)butane, 1,6-bis(3-ethyl-3-oxetanylmethoxy)hexane, pentaerythritol tris(3-ethyl-3-oxetanylmethyl) ether, pentaerythritol tetrakis(3-ethyl-3-oxetanylmethyl) ether, polyethylene glycol bis(3-ethyl-3-oxetanylmethyl) ether, dipentaerythritol hexakis(3-ethyl-3-oxetanylmethyl) ether, dipentaerythritol pentakis(3-ethyl-3-oxetanylmethyl) ether, dipentaerythritol tetrakis(3-ethyl-3-oxetanylmethyl) ether, caprolactone modified dipentaerythritol hexakis(3-ethyl-3-oxetanylmethyl) ether, caprolactone modified dipentaerythritol pentakis(3-ethyl-3-oxetanylmethyl) ether, ditrimethylolpropane tetrakis(3-ethyl-3-oxetanylmethyl) ether, EO modified bisphenol A bis(3-ethyl-3-oxetanylmethyl) ether, PO modified bisphenol A bis(3-ethyl-3-oxetanylmethyl) ether, EO modified hydrogenated bisphenol A bis(3-ethyl-3-oxetanylmethyl) ether, PO modified hydrogenated bisphenol A bis(3-ethyl-3-oxetanylmethyl) ether, EO modified bisphenol F (3-ethyl-3-oxetanylmethyl) ether, the compound having two oxetane rings represented by the following general formula (16), the compound having two oxetane rings represented by the following general formula (17), the compound having two oxetane rings represented by the following general formula (18), and the compound having three or more oxetane rings represented by the following general formula (19).

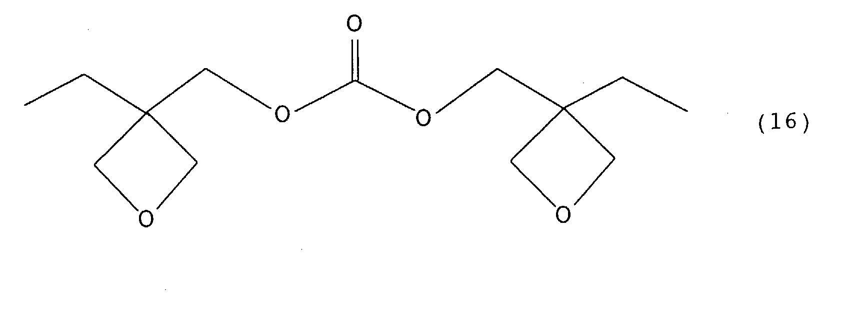

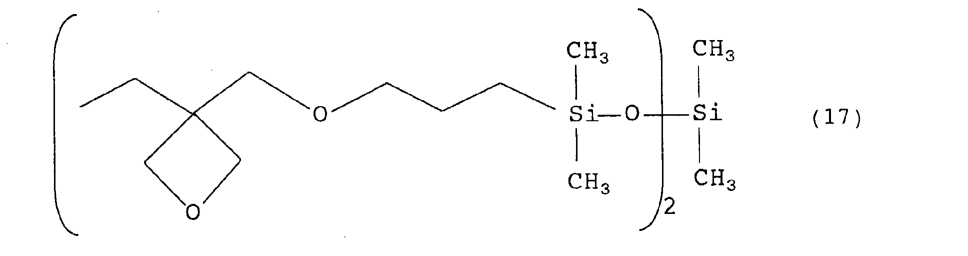

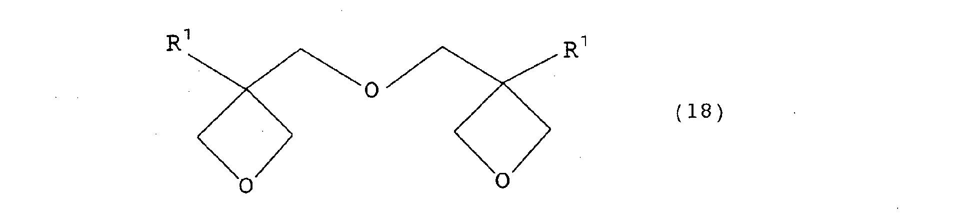

In the formula (18), R¹ represents those as defined in the general formula (2).

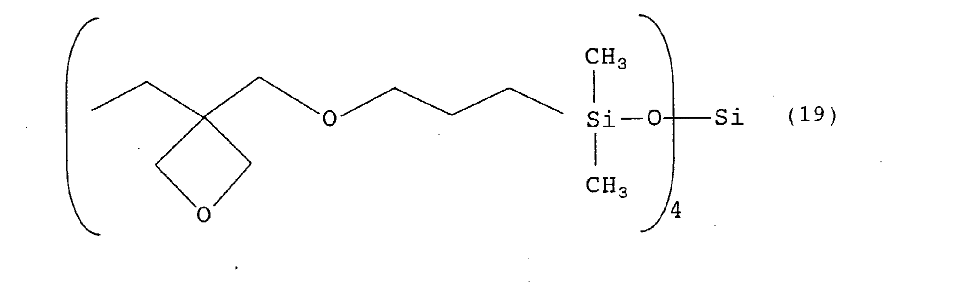

Among them, the compound including bis(3-ethyl-3-oxetanylmethyl) ether, (3-ethyl-3-oxetanylmethoxy)methylbenzene represented by the following formula (20), 1,4-bis[(3-ethyl-3-oxetanylmethoxy)methyl]benzene represented by the following formula (21), 1,2-bis(3-ethyl-3-oxetanylmethoxy)ethane represented by the following formula (22), and trimethylolpropane tris(3-ethyl-3-oxetanylmethyl) ether represented by the following formula (23) are more preferred, and bis(3-ethyl-3-oxetanylmethyl) ether is much more preferred.

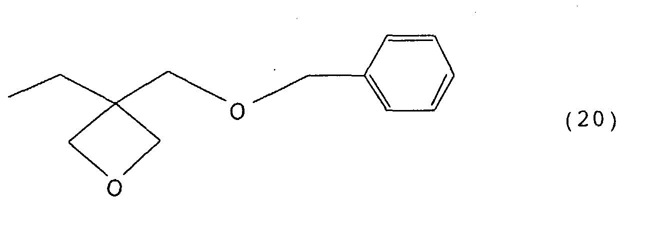

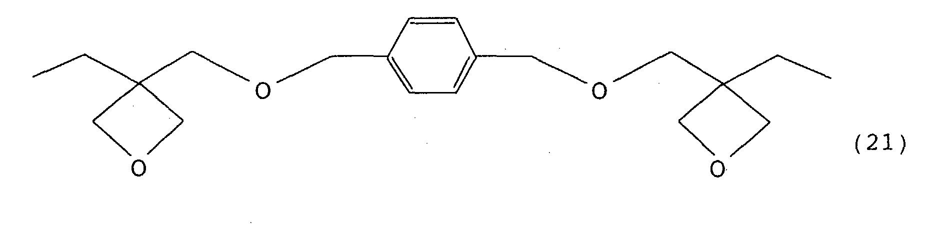

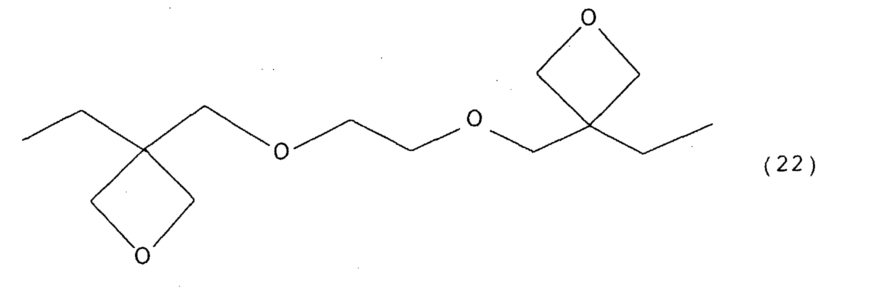

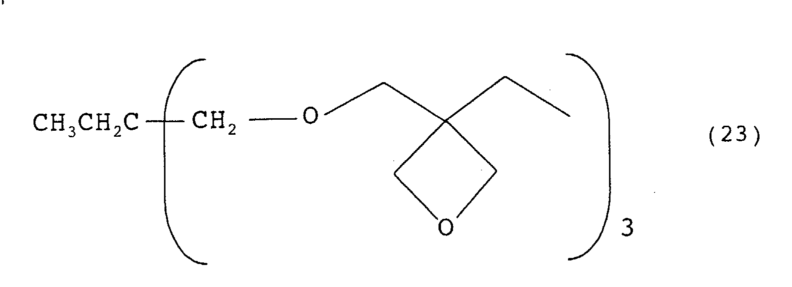

The oxetane compound may further include a compound having a high molecular weight, i.e., a number average molecular weight of about 1000 to 5000 as converted into a value of polystyrene measured by the gel permeation chromatography. The compound, having a high molecular weight, i.e., a number average molecular weight of about 1000 to 5000 as converted into a value of polystyrene measured by the gel permeation chromatography, is not specifically limited and includes compounds represented by the following formulas (24), (25), or (26) by way of example.

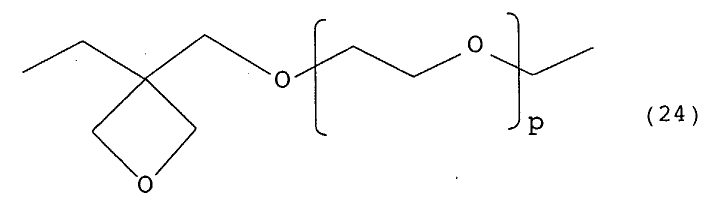

In general formula (24), p represents an integer of 20 to 200.

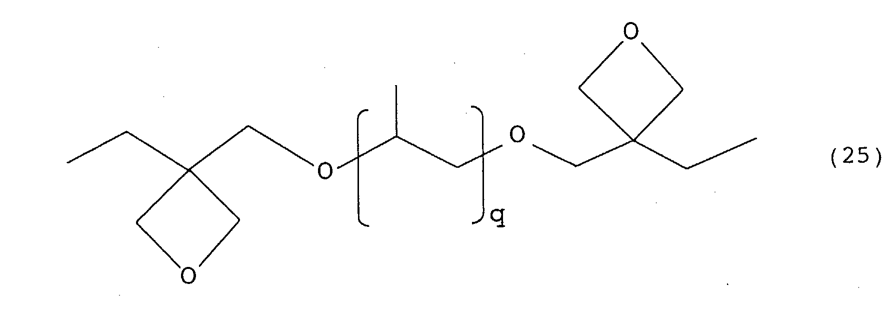

In general formula (25), q represents an integer of 15 to 100.

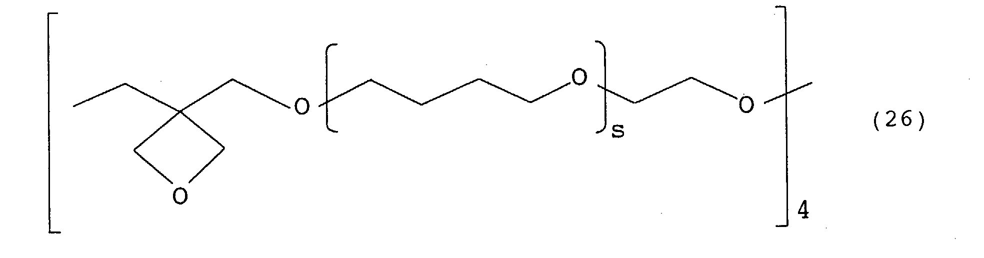

In general formula (26), S represents an integer of 20 to 200.

As the oxetane compound, when 3-ethyl-3-hydroxymethyloxetane, di[1-ethyl(3-oxetanyl)]methyl ether, or 3-ethyl-3-(2-ethylhexyloxymethyl)oxetane is used, then the reaction rate of the photo-cationic polymerization can be increased in the image-receiving layer composition or the overcoat layer composition of the present invention, and it is possible to quickly obtain the the ink-jet recording image-receiving layer or the overcoat layer.

The content of the oxetane compound in the composition is preferably about 2 % by weight to about 87 % by weight in order to avoid the occurrence of the odor and the cloudiness. Further, when the composition is used for an ink head of an ink-jet apparatus (or ink discharging apparatus) which performs ink-molding or ink-curing printing, the content of the oxetane compound is preferably about 20 % by weight to about 77 % by weight. When the composition is used for the ink preferably usable for the ink-jet application, the content of the oxetane compound affects the viscosity of the composition. Therefore, it is preferable to adjust the content within a range in which the viscosity of the composition upon discharging the ink from an ink jet head is 2 cps to 30 cps. The oxetane compound is disclosed in detail in U.S. Patent No. 5,463,084, the content of which has been incorporated herein by reference.

Especially, the purity of the oxetane compound, used for the image-receiving layer composition or the overcoat layer composition of the present invention, is preferably 100%. After the diligent investigations performed by the present inventors, it has been found out that the odor occurred out of the conventional active energy beam-curable compound under high temperature and the attachment of volatile component to the surroundings, is caused by the impurities contained in the oxetane compound used as the raw material. Since the purity of the oxetane compound used as the raw material used in the invention is 100%, the image-receiving layer composition or the overcoat layer composition of the present invention does not generate, when heated after being cured, a secondary product which is out-gas produced by a reaction with additive or additives, thus preventing the occurrence of the odor and the attachment of the volatile component to the surroundings. Of course, the purity of the oxetane compound used as the raw material is not necessarily to be 100%, and in the curing process of the composition, the purity may be less than 100 % so long as the characteristics and performance required by the image-receiving layer composition or the overcoat layer composition, the recording medium having the composition formed thereon, and the printed article which comprises the recording medium having the printing applied thereon of the present invention are satisfied. In practice, it is preferable to intentionally exclude from the oxetane compound a compound, such as diluent, which would generate a secondary product during the curing process or which would become the volatile component. The oxetane compound, used for the image-receiving layer composition or the overcoat layer composition of the present invention, may be used singly. Alternatively, two or more species of the compounds as described above may be used in combination. In either case, the oxetane compound may be comprised of oxetane-based component which effectively provide a desired resulting product without inhibiting a required performance or characteristics even when a secondary product is generated in the curing process.

The content of the oxetane compound, used for the image-receiving layer composition or the overcoat layer composition of the present invention, is preferably less than 99 parts by weight with respect to 100 parts by weight of the composition. If the content of the oxetane compound is not less than 99 parts by weight, the crosslinking density may become insufficient to sufficiently cure the image-receiving layer composition or the overcoat layer composition when the image-receiving layer composition or the overcoat layer composition is irradiated with an active energy beam.

The image-receiving layer composition or the overcoat layer composition of the present invention contains a photo-cationic polymerization initiator. In this specification, a photo-cationic polymerization initiator means a compound which can release a substance which initiates the cationic polymerization when the initiator receives an active energy beam.

The photo-cationic polymerization initiator, used for the image-receiving layer composition or the overcoat layer composition of the present invention, is not specifically limited and may includes, for example, a mixture of triarylsulfonium hexafluorophosphate salts and propylene carbonate; onium salt having the structure represented by the following general formula (27); the onium salt having the anion represented by the general formula [MXₙ(OH)⁻], perchlorate ion (ClO₄⁻), trifluoromethanesulfonate ion (CF₃SO₃⁻), fluorosulfonate ion (FSO₃⁻), toluenesulfonate ion, trinitrobenzenesulfonate anion, and trinitrotoluenesulfonate anion; iron/allene complex; aluminum complex/photolysis silicon compound and so on. Among them, the mixture of triarylsulfonium hexafluorophosphate salts and propylene carbonate and the onium salt having the structure represented by the following general formula (27) are more preferred, and the mixture of triarylsulfonium hexafluorophosphate salts and propylene carbonate is much more preferred.

(R¹ ₐR² _{b}R³ _{c}R⁴ _{d}Z)^{+m}(MXₙ₊ₘ)^{-m} (27)

In the general formula (27), the cation is onium. Z is S, Se, Te, P, As, Sb, Bi, O, I, Br, Cl, or N≡N. R¹, R², R³, and R⁴ are identical or different organic groups. a, b, c, and d are integers of 0 to 3 respectively. (a+b+c+d) is equal to the valency number of Z. X represents halogen atom. M represents metalloid or metal to constitute the central atom of the halide complex, including, for example, B, P, As, Sb, Fe, Sn, Bi, Al, Ca, In, Ti, Zn, Sc, V, Cr, Mn, and Co. m represents the net charge of the halide complex. n represents the number of atoms in the halide complex ion.

Specifically, the anion (MX_{*n+m*}) in the general formula (27) described above includes, for example, tetrafluoroborate (BF₄⁻), hexafluorophosphate (PF₆⁻), hexafluoroarsenate (AsF₆⁻), and hexachloroantimonate (SbCl₆⁻).

The onium solt is preferably an aromatic onium salt. Especially, it is preferable to use, for example, aromatic halonium salt described, for example, in Japanese Patent Application Laid-open No. 50-151996 corresponding to England Patent No. 1516351 and Japanese Patent Application Laid-open No. 50-158680 corresponding to United States Patent No. 4,394,403; VIA group aromatic onium salt described, for example, in Japanese Patent Application Laid-open No. 50-151997 corresponding to England Patent No. 1516511, Japanese Patent Application Laid-open No. 52-30899 corresponding to United States Patent No. 4,256,828, Japanese Patent Application Laid-open No. 56-55420 corresponding to England Patent No. 2061280, and Japanese Patent Application Laid-open No. 55-125105 corresponding to United States Patent No. 4,197,174; VA group aromatic onium salt described, for example, in Japanese Patent Application Laid-open No. 50-158698 corresponding to United States Patent No. 4,069,055; oxosulfoxonium salt described, for example, in Japanese Patent Application Laid-open No. 56-8428, Japanese Patent Application Laid-open No. 56-149402, and Japanese Patent Application Laid-open No. 57-192429 corresponding to United States Patent No. 4,387,216; aromatic diazonium salt described, for example, in Japanese Patent Application Laid-open No. 49-17040; and thiopyrylium salt described in United States Patent No. 4,139,655.

The onium salt as described above releases Lewis acid when it receives an active energy beam. By containing the onium salt, the ink-jet recording image-receiving layer obtained from the image-receiving layer composition or the overcoat layer obtained from the overcoat layer composition of the present invention can have excellent closslinking degree, thus effectively avoiding occurrence of the odor and the attachment of the volatile component to the surroundings.

Commercially available products of the photo-cationic photopolymerization initiator may include, for example, UVI-6950, UVI-6970, UVI-6974, and UVI-6990 (all produced by Union Carbide Corporation); ADEKA Optomer SP-150, SP-151, SP-170, and SP-171 (all produced by Asahi Denka Co., Ltd.); Irgacure 261 (produced by Ciba-Geigy Corporation); CI-2481, CI-2624, CI-2639, and CI-2064 (all produced by NIPPON SODA CO., LTD.); CD-1010, CD-1011, and CD-1012 (all produced by Sartomer Company); and DTS-102, DTS-103, NAT-103, NDS-103, TPS-103, MDS-103, MPI-103, and BBI-103 (all produced by Midori Kagaku Co., Ltd.). Among the commercially available products described above, UVI-6970, UVI-6974, UVI-6990, ADEKA Optomer SP-150, SP-170, SP-171, CD-1012, and MPI-103 are especially preferred, because it is possible to allow the image-receiving layer composition or the overcoat layer composition of the present invention to express the high curing sensitivity.

The content of the photo-cationic polymerization initiator, used for the composition of the present invention, is preferably about 1 part by weight to 12 parts by weight with respect to 100 parts by weight of the total content of the epoxy compound and the oxetane compound used for the composition of the present invention. If the content of the photo-cationic photopolymerization initiator is less than 1 part by weight, the composition of the present invention may not be sufficiently cured by irradiation with an active energy beam. On the other hand, if the content of the photo-cationic photopolymerization initiator is more than 12 parts by weight, it may not be possible to obtain sufficient adhesive property to the substrate or the ink and sufficient moisture resistance in the ink-jet recording image-receiving layer or the overcoat layer obtained by curing the composition of the present invention.

Within the extent not to affect the object of the present invention, the image-receiving layer composition or the overcoat layer composition of the present invention may further contain inactive components such as a photosensitizing agent, an inorganic filler, a dye, a pigment, a viscosity-adjusting agent, a treating agent, and an ultraviolet radiation-blocking agent; and a component capable of radical polymerization with the active energy beam, such as a compound having (meth)acryloyl group and a radical photopolymerization initiator.

The photosensitizing agent is not specifically limited, and may include, for example, pyrene, perylene, acridine orange, thioxanthone, 2-chlorothioxanthone, and benzoflavin.

The image-receiving layer composition or the overcoat layer composition of the present invention is cured with an active energy beam. The method for curing the composition of the present invention with active energy beam is not specifically limited and may use a conventionally known method which uses, for example, x-ray, ultraviolet ray, visible ray and so on. It is preferable to use ultraviolet ray as means to cure the composition of the present invention. As a light source of ultraviolet ray, an ultraviolet lamp is generally used in view of practicality and economy. Specifically, lamps such as a low voltage mercury lamp, middle voltage mercury lamp, high voltage mercury lamp, a xenon lamp, a gallium lamp and metal halide lamp. The curing as described above may be performed by irradiating an active energy beam once. Alternatively, the curing may be performed by irradiating an active energy beam a plurality of times.

The ink-jet recording image-receiving layer using the image-receiving layer composition firmly fixes an ink layer, formed by curing the ink for ink-jet recording comprising the active energy beam-curable composition, thus providing an printed article excellent in surface hardness, adhesive property and flexibility.

The overcoat layer comprising the overcoat layer composition of the present invention reduces the granuality in a printed article printed with the ink-jet system, and firmly fixes a recording medium and an ink layer to provide an printed article excellent in moisture resistance, surface hardness, adhesive property and flexibility.

After the diligent investigations performed by the present inventors, it has been found out that when a vinyl ether compound, used as diluent in the active energy beam-curable compound to lower the viscosity, is heated after being cured, the vinyl ether compound generates out-gas such as acetaldehyde and crotonaldehyde which may cause the occurrence of the odor under high temperature and the attachment of the volatile component to the surroundings. By containing the epoxy compound and the oxetane compound, the image-receiving layer composition or the overcoat layer composition of the present invention is easy to handle, and even heated after being cured, does not generate out-gas which causes the occurrence of the odor and the attachment of the volatile component to the surroundings. Especially, in the image-receiving layer composition or the overcoat layer composition of the present invention, when 3,4-epoxycyclohexylmethyl-3',4'-epoxycyclohexane carboxylate is used as the epoxy compound; bis(3-ethyl-3-oxetanylmethyl) ether is used as the oxetane compound; and a mixture of triarylsulfonium hexafluorophosphate salts and propylene carbonate is used as the photo-cationic polymerization initiator, it is possible to obtain more conspicuous effect of the present invention.

The ink-jet recording recording medium of the present invention includes a substrate and an ink-jet recording image-receiving layer comprised of the image-receiving layer composition of the present invention which coats the surface of the substrate. By having the ink-jet recording image-receiving layer comprised of the image-receiving layer composition of the present invention, the ink-jet recording recording medium of the present invention does not generate out-gas which causes the occurrence of the odor and the attachment of the volatile component to the surroundings, even when heated. Further, the ink-jet recording recording medium of the present invention firmly fixes the ink layer formed by curing the ink for ink-jet recording comprised of an active energy beam-curable composition, in order to provide an printed article excellent in surface hardness, adhesive property and flexibility.

The method to obtain the ink-jet recording medium of the present invention is not specifically limited and may include, for example, the method in which the image-receiving layer composition is coated, with a wire bar-corder or the like, on the surface of the substrate, and then the composition is cured with an apparatus which can irradiate an active energy beam such as ultraviolet light. Of course, as the method to obtain the ink-jet recording medium, the composition may be coated on a necessary portion of the surface of on the substrate with the ink-jet system.

The substrate is not specifically limited and may include, for example, metal such as iron, aluminum, stainless steel; inorganic ceramic base material such as cement, concrete, ALC (autoclaved lightweight concrete panel), flexible board, mortar, slate, gesso, ceramics, brick; plastic molding such as phenol resin, epoxy resin, acrylic resin, polyester, polycarbonate, polyethylene, polypropylene, ABS resin (acrylonitrile-butadiene-styrene resin); plastic film such as polyethylene, polypropylene, polyvinyl alcohol, polycarbonate, polyethylene terephthalate, polyurethane, polyimide, polyethylene naphtalete, polytetrafluoro-ethylene, polyetherehterketone, polyparaphenilene sulfide, polyetherimide, polyparabanic acid, polyethersulfone, polyparaphenilene telephtalamide, heat-reversible norbornene-base resin such as norbonene-base ring-opening polymer or addition condensation polymer, or the hydrogen additive thereof; organic/inorganic composite material comprised of a composite of a Silyl modification of the resin described above and inorganic component; wood; paper and glass.

The method to obtain the overcoat layer with the use of the overcoat layer composition of the present invention is not specifically limited, and may include, for example, the method in which an overcoat layer is formed by coating the overcoat layer composition of the present invention, with an wire bar-corder or the like, on the surface of an ink layer formed on the surface of a recording medium with an ink-jet printer, and then the overcoat layer is cured with an irradiating apparatus or the like; the method in which an overcoat layer comprising the overcoat layer composition of the present invention is formed on the surface of an ink layer formed on the surface of a recording medium with an ink-jet printer which comprises a printer head provided with an ultraviolet light irradiating apparatus, and then the overcoat layer is cured with the ultraviolet light irradiating apparatus.

Further, when the ink layer is comprised of the ink for ink-jet recording containing an epoxy compound, an oxetane compound and a photo-cationic polymerization initiator, more conspicuous effect can be obtained.

The epoxy compound, used for the ink for ink-jet recording, is not specifically limited and may includes, for example, an identical epoxy compound as the epoxy compound used for the image-receiving layer composition or the overcoat layer composition of the present invention. Especially, the alicyclic epoxy compound as described above is preferably used. By using the alicyclic epoxy compound, it is possible to obtain excellent adhesive property to the ink-jet recording medium and crosslinking degree, thus effectively avoiding the occurrence of the odor under high temperature and the attachment of the volatile component to the surroundings.

The alicyclic epoxy compound, used for the ink for ink-jet recording of the present invention, is not specifically limited and may preferably be the epoxy compound having two or more alicyclic epoxy groups in one molecule, including, for example, 3,4-epoxycyclohexylmethyl-3',4'-epoxycyclohexane carboxylate, bis(3,4-epoxycyclohexylmethyl)adipate, limonene dioxide and limonene monooxide. Epsecially, 3,4-epoxycyclohexylmethyl-3',4'-epoxycyclohexane carboxylate is much preferred.

It is preferable that the purity of the epoxy compound, used for the ink, is 100 % because of the same reason as in the case of the image-receiving layer composition or the overcoat layer composition of the present invention.

The content of the epoxy compound used for the ink for ink-jet recording is preferably not less than 1 part by weight with respect to 100 parts by weight of the ink. If the content of the epoxy compound is less than 1 part by weight, it may not be possible to obtain sufficient crosslinking degree to sufficiently cure the ink when the ink for ink-jet recording of the present invention is irradiated with an active energy beam.

The ink for ink-jet recording may contain an oxetane compound. The oxetane compound used for the ink for ink-jet recording is not specifically limited and may include, for example, an identical compound to the oxetane compound used for the image-receiving layer composition or the overcoat layer composition of the present invention. Among them, the compounds having two or more oxetane rings are especially preferred. The compound, having two or more oxetane rings and used for the ink for ink-jet recording, is not specifically limited and may be the compound having two or more oxetane rings represented by the above general formula (3), and may be the compounds having three or more oxetane rings represented by the above general formulas (8) and (15). Among them, the compound which has two or more oxetane rings and which is preferably used as the oxetane component of the present invention, includes, for example, bis(3-ethyl-3-oxetanylmethyl) ether, (3-ethyl-3-oxetanylmethoxy)methylbenzene represented by the above formula (20), 1,4-bis[(3-ethyl-3-oxetanylmethoxy)methyl]benzene represented by the above formula (21), 1,2-bis(3-ethyl-3-oxetanylmethoxy)ethane represented by the above formula (22), trimethylolpropane tris(3-ethyl-3-oxetanylmethyl) ether represented by the above formula (23), and the compound represented by the above general formula (15). Among them, bis(3-ethyl-3-oxetanylmethyl) ether is much preferred.

The oxetane compound used for the ink for ink-jet recording may include a compound having a high molecular weight, i.e., a number average molecular weight of about 1000 to 5000 as converted into a value of polystyrene measured by the gel permeation chromatography.

Especially, when 3-ethyl-3-hydroxymethyloxetane, di[1-ethyl(3-oxetanyl)]methyl ether, or 3-ethyl-3-(2-ethylhexyloxymethyl)oxetane is used as the oxetane compound used for the ink for ink-jet recording, then the reaction rate of the photo-cationic polymerization can be increased in the ink for ink-jet recording of the present invention to quickly obtain the ink layer as described above.

It is preferable that the purity of the oxetane compound used for the ink is 100 % because of the same reason as in the case of the image-receiving layer composition or the overcoat layer composition of the present invention as described above.

The content of the oxetane compound used for the ink for ink-jet recording is preferably less than 99 parts by weight with respect to 100 parts by weight of the ink for ink-jet recording. If the content of the oxetane compound is not less than 99 parts by weight, it may not be possible to obtain sufficient crosslinking even when the ink for ink-jet recording of the present invention is irradiated with an active energy beam, and may subsequently fail to sufficiently cure the ink.

The photo-cationic polymerization initiator used for the ink for ink-jet recording is not specifically limited and includes, for example, a mixture of triarylsulfonium hexafluorophosphate salts and propylene carbonate; an identical photo-catinonic polymerization initiator to the photo-cationic polymerization initiator used for the image-receiving layer composition or the overcoat layer composition of the present invention; and onium salt having the structure represented by the above general formula (27). The mixture of triarylsulfonium hexafluorophosphate salts and propylene carbonate is especially preferred.

As the onium salt used for the ink for ink-jet recording, it is preferred to use an identical onium salt to the onium salt used for the image-receiving layer composition or the overcoat layer composition of the present invention. By containing the onium salt, the ink for ink-jet recording of the present invention can obtain an ink layer excellent in crosslinking degree, thus effectively avoiding the occurrence of the odor and the attachment of the volatile component to the surroundings.

Among the commercially available products of the photo-cationic photopolymerization initiator used for the ink for ink-jet recording of the present invention, it is preferable to use an identical photo-cationic polymerization initiator to the photo-cationic polymerization initiator used for the image-receiving layer composition or the overcoat layer composition of the present invention, in an identical content to the content of the photo-cationic polymerization initiator used for the image-receiving layer composition or the overcoat layer composition.

Within the extent not to affect the object of the present invention, the ink for ink-jet recording of the present invention may further contain inactive components such as a photosensitizing agent, an inorganic filler, a dye, a pigment, a viscosity-adjusting agent, a treating agent, and an ultraviolet radiation-blocking agent; and a component capable of radical polymerization with the active energy beam, such as a compound having (meth)acryloyl group and a radical photopolymerization initiator.

The ink for ink-jet recording is cured with an active energy beam. The active energy beam used to cure the ink for ink-jet recording of the present invention is not specifically limited and may include, for example, an identical active energy beam to the active energy beam used to cure the image-receiving layer composition or the overcoat layer composition of the present invention. The ink for ink-jet recording may be cured concurrently with the image-receiving layer composition or the overcoat layer composition of the present invention. Alternatively, the ink for ink-jet recording may be cured separately from the image-receiving layer composition or the overcoat layer composition.

The ink layer using the ink for ink-jet recording firmly fixes to the ink-jet recording medium to provide a printed article excellent in surface hardness, adhesive property and flexibility. Especially, by using the ink-jet recording medium of the present invention, it is possible to obtain conspicuous effect in the adhesive property or the like. Further, by containing the epoxy compound and the oxetane compound, the ink for ink-jet recording can adjust the viscosity even without the vinyl ether compound as described above. Thus, the ink is easy to handle and make it possible to perform a stable discharge of an ink with low viscosity of not more than several 10 cps in the ink-jet recording. Thus, the ink does not generate out-gas which causes the occurrence of the odor and the attachment of the volatile component to the surrounding, even when heated after being cured. Especially, in the ink for ink-jet recording, when 3,4-epoxycyclohexylmethyl-3',4'-epoxycyclohexane carboxylate is used as the epoxy compound; bis(3-ethyl-3-oxetanylmethyl) ether is used as the oxetane compound; and a mixture of triarylsulfonium hexafluorophosphate salts and propylene carbonate is used as the photo-cationic polymerization initiator, it is possible to obtain more conspicuous effect of the ink as described.

### DESCRIPTION OF THE PREFERRED EMBODIMENTS

The present invention will be explained in further detail below as exemplified by Examples, but is not limited to these Examples.

### EXAMPLE 1 AND COMPARATIVE EXAMPLE 1

### (1) Preparation of the image-receiving layer composition

A cationic polymerizable compound as the image-receiving layer composition of the present invention was prepared. Also, a radical polymerizable compound, which is conventionally used as the conventional image-receiving layer composition, was prepared for purpose of comparison.

### Cationic polymerizable composition

A cationic polymerizable composition, as the image-receiving layer composition, was obtained by mixing and agitating, at room temperature in a dark room, an epoxy compound, i.e., 20 parts by weight of 3,4-epoxycyclohexylmethyl-3',4'-epoxycyclohexane carboxylate (trade name: UVR-6110, produced by Union Carbide Corporation), an oxetane compound, i.e., 80 parts by weight of bis(3-ethyl-3-oxetanylmethyl) ether (trade name: OXT-221, produced by Toagosei Co., Ltd.), and a photo-cationic polymerization initiator, i.e., 4 parts by weight of a mixture of triarylsulfonium hexafluorophosphate salts and propylene carbonate (trade name: UVI-6990, produced by Union Carbide Corporation, active ingredient: 50 %).

### Radical polymerizable composition

A radical polymerizable composition, as the image-receiving layer composition, was obtained by mixing and agitating, at room temperature in a dark room, an acrylic compound, i.e., 20 parts by weight of acryloyl morpholine (trade name: ACMO, produced by Kohjin Co., Ltd.), 80 parts by weight of polyester acrylates (trade name: M-8530 manufactured by Toagosei Co., Ltd.), and a radical polymerization initiator, i.e., 4 parts by weight of 2-benzil-dimethylamino-1-(4-morpholinophenyl)-butanone-1 (trade name: IRGACURE369, manufactured by Ciba Specialty Chemicals Inc.), and a sensitizer, i.e., 1 part by weight of 2, 4, 6, N, N-penthamethylaniline (manufactured by Aldrich).

### (2) Preparation of Ink-jet Recording medium

Each of the obtained image-receiving layer compositions was coated with a wire bar corder, onto a plate formed of polycarbonate having the thickness of 100 µm with the coating thickness of about 15 µm, and then the composition was cured by passing composition through once a conveyer type ultraviolet light-irradiating apparatus Eye Grandage ECS-401GX (lamp output: 3.0 kW, integral light intensity: 1,000mJ/cm², produced by Eye Graphics Co., Ltd.) to obtain an ink-jet recording medium. The apparatus is provided with a super high voltage mercury lamp of 120 W/cm.

### (3) Preparation of Ink for Ink-jet Recording

As ink for ink-jet recording, cationic polymerizable color inks 1, 2, 3 were prepared. Also, radical polymerizable color inks 1, 2, 3 which are conventionally used as the conventional ink for ink-jet recording were prepared for purpose of comparison. Each of the prepared inks had a viscosity of not more than 30 cps, which are suitable for ink for ink-jet recording.

### Cationic polymerizable Color Ink 1

A cationic polymerizable color ink 1 was obtained by mixing and agitating an epoxy compound, i.e., 10 parts by weight of 3,4-epoxycyclohexylmethyl-3',4'-epoxycyclohexane carboxylate (trade name: UVR-6110, produced by Union Carbide Corporation), 20 parts by weight of limonene dioxide (manufacture by Elf Atochem), an oxetane compound, i.e., 70 parts by weight of bis(3-ethyl-3-oxetanylmethyl) ether (trade name: OXT-221, produced by Toagosei Co., Ltd.), a photo-cationic polymerization initiator, i.e., 4 parts by weight of a mixture of triarylsulfonium hexafluorophosphate salts and propylene carbonate (trade name: UVI-6990, produced by Union Carbide Corporation, active ingredient: 50 %), and a pigment, i.e. 3 parts by weight of Pigment Black 7.

### Cationic polymerizable Color Ink 2

A cationic polymerizable color ink 2 was obtained by mixing and agitating an epoxy compound, i.e., 10 parts by weight of 3,4-epoxycyclohexylmethyl-3',4'-epoxycyclohexane carboxylate (trade name: UVR-6110, produced by Union Carbide Corporation), 20 parts by weight of limonene dioxide (manufacture by Elf Atochem), an oxetane compound, i.e., 70 parts by weight of bis(3-ethyl-3-oxetanylmethyl) ether (trade name: OXT-221, produced by Toagosei Co., Ltd.), a photo-cationic polymerization initiator, i.e., 4 parts by weight of a mixture of triarylsulfonium hexafluorophosphate salts and propylene carbonate (trade name: UVI-6990, produced by Union Carbide Corporation, active ingredient: 50 %), and a pigment, i.e. 3 parts by weight of Pigment Blue 15:3.

### Cationic polymerizable Color Ink 3

A cationic polymerizable color ink 3 was obtained by mixing and agitating an epoxy compound, i.e., 10 parts by weight of 3,4-epoxycyclohexylmethyl-3',4'-epoxycyclohexane carboxylate (trade name: UVR-6110, produced by Union Carbide Corporation), 20 parts by weight of limonene dioxide (manufacture by Elf Atochem), an oxetane compound, i.e., 70 parts by weight of bis(3-ethyl-3-oxetanylmethyl) ether (trade name: OXT-221, produced by Toagosei Co., Ltd.), a photo-cationic polymerization initiator, i.e., 4 parts by weight of a mixture of triarylsulfonium hexafluorophosphate salts and propylene carbonate (trade name: UVI-6990, produced by Union Carbide Corporation, active ingredient: 50 %), and a pigment, i.e. 3 parts by weight of Pigment Red 122.

### Radical Polymerizable Color Ink 1

A radical polymerizable color ink 1 was obtained by mixing and agitating an acrylic compound, i.e., 20 parts by weight of acryloyl morpholine (trade name: ACMO, produced by Kohjin Co., Ltd.), 80 parts by weight of polyester acrylate (trade name: M-8530 manufactured by Toagosei Co., Ltd.), and a radical polymerization initiator, i.e., 4 parts by weight of 2-benzil-dimethylamino-1-(4-morpholinophenyl)-butanone-1 (trade name: IRGACURE369, manufactured by Ciba Specialty Chemicals Inc.), a sensitizer, i.e., 1 part by weight of 2, 4, 6, N, N-penthamethylaniline (manufactured by Aldrich), and a pigment, i.e., 3 parts by weight of Pigment Black 7.

### Radical Polymerizable Color Ink 2

A radical polymerizable color ink 2 was obtained by mixing and agitating an acrylic compound, i.e., 20 parts by weight of acryloyl morpholine (trade name: ACMO, produced by Kohjin Co., Ltd.), 80 parts by weight of polyester acrylate (trade name: M-8530 manufactured by Toagosei Co., Ltd.), and a radical polymerization initiator, i.e., 4 parts by weight of 2-benzil-dimethylamino-1-(4-morpholinophenyl)-butanone-1 (trade name: IRGACURE369, manufactured by Ciba Specialty Chemicals Inc.), a sensitizer, i.e., 1 part by weight of 2, 4, 6, N, N-penthamethylaniline (manufactured by Aldrich), and a pigment, i.e., 3 parts by weight of Pigment Blue 15:3.

### Radical Polymerizable Color Ink 3

A radical polymerizable color ink 3 was obtained by mixing and agitating an acrylic compound, i.e., 20 parts by weight of acryloyl morpholine (trade name: ACMO, produced by Kohjin Co., Ltd.), 80 parts by weight of polyester acrylate (trade name: M-8530 manufactured by Toagosei Co., Ltd.), and a radical polymerization initiator, i.e., 4 parts by weight of 2-benzil-dimethylamino-1-(4-morpholinophenyl)-butanone-1 (trade name: IRGACURE369, manufactured by Ciba Specialty Chemicals Inc.), a sensitizer, i.e., 1 part by weight of 2, 4, 6, N, N-penthamethylaniline (manufactured by Aldrich), and a pigment, i.e., 3 parts by weight of Pigment Red 122.

### (4) Preparation of Printed Article

Printed articles (Samples A2, A5, A8, A11, A14 and A17) were obtained by respectively combining an ink-jet recording medium having the image-receiving layer formed of the cationic polymerizable composition, with each of the cationic polymerizable color inks 1-3 as described above, and with each of the radical polymerizable color inks 1-3, in order to apply printing on the surface of each of the ink-jet recording media with an ink-jet printer (manufactured by Brother Kogyo Kabushiki Kaisha, as described later), by respectively using the color inks as described above, followed by being cured by an active energy beam. Printed articles (Samples A3, A6, A9, A12, A15 and A18) were obtained by respectively combining an ink-jet recording medium having the image-receiving layer formed of the radical polymerizable composition, with each of the cationic polymerizable color inks 1-3 as described above, and with each of the radical polymerizable color inks 1-3, in order to apply printing on the surface of each of the ink-jet recording media with an ink-jet printer (manufactured by Brother Kogyo Kabushiki Kaisha, as described later), by respectively using the color inks as described above, followed by being cured by an active energy beam. Printed articles (Samples A1, A4, A7, A10, A13 and A16) were obtained by respectively combining an ink-jet recording medium not having the image-receiving layer (a plate formed of polycarbonate having the thickness of 100 µm), with each of the cationic polymerizable color inks 1-3 as described above, and with each of the radical polymerizable color inks 1-3, in order to apply printing on the surface of each of the ink-jet recording media with an ink-jet printer (manufactured by Brother Kogyo Kabushiki Kaisha, as described later), by respectively using the color inks as described above, followed by being cured by an active energy beam. The evaluation was made on the obtained printed articles (Samples A1 to A18), as shown in the following Table 1.

### (5) Evaluation

### 1. Curing Degree of Ink Coating Film

The obtained printed article was used as test piece to examine the curing degree of the ink coating film with an apparatus for pencil scratch test in conformity to the Japanese Industrial Standard JIS K 5400 regarding the general coating testing method. The test results were indicated by pencil density marks. Since some coating films were not sufficiently cured to leave an uncured portion therein, the stickiness was also determined by finger-touching the coating film surface. When the stickiness was confirmed on a coating, the test result indicated "with tackiness".

### 2: Adhesive Property of Ink Coating Film

Each of the obtained printed articles was used as test piece in order to examine the adhesive property of the plate formed of polycarbonate to the ink-jet recording image-receiving layer, and to examine the adhesive property of the ink-jet recording image-receiving layer to the ink coating film, in conformity to the X-cut tape method from the Japanese Industrial Standard JIS K 5400 regarding the general coating testing method. Specifically, an X-shaped cut (X-cut) was made, which penetrates the ink coating film to reach the surface of the plate formed of polycarbonate. Then, an adhesive cellophane tape was applied onto the X-cut and removed from the X-cut. The peeling condition on the X-cut portion was visually observed, and the test results were indicated by evaluation score, in which a higher score is indicated as the ink coating film has more excellent adhesive property.

### 3: Flexibility of Ink Coating Film

Each of the obtained printed articles was used as test piece to examine the crack resistance of the ink coating film, when the surface having the ink coating film applied thereon of printed article was outwardly bent, with an apparatus for bending test in conformity to the Japanese Industrial Standard JIS K 5400 regarding the general coating testing method. The test results were evaluated on the basis of the following criteria: A test piece with no cracking or peeling of the ink coating film was indicated by "+", and a test piece with cracking and peeling in the ink coating film was indicated by "-".

### 4: Out-gas Generation Characteristics

Each of the obtained printed articles as a test piece was placed on a hot plate heated to 110 °C, and was covered with a glass vessel arranged thereon. The cloudiness in the glass vessel, which possibly appeared after being left to stand for 24 hours, was visually confirmed. A test piece with no cloudiness was indicated by "+", a test piece with slight cloudiness was indicated by "±", and a test piece with conspicuous cloudiness was indicated by "-".

**Table 1**

| | Ink layer | Ink-jet recording image-receiving layer | Hardness (pencil density mark) | Adhesive property (evaluation point) | Flexibility | Outgas generation |
|---|---|---|---|---|---|---|
| Sample A1 | Cationic polymerizable color ink 1 | - | F | 0 | - | + |
| Sample A2 | | Cationic polymerizable | 9H | 8 | + | + |
| Sample A3 | | Radical polymerizable | 9H | 4 | + | + |
| Sample A4 | Cationic polymerizable color ink 2 | - | B | 0 | - | + |
| Sample A5 | | Cationic polymerizable | F | 8 | + | + |
| Sample A6 | | Radical polymerizable | HB | 4 | + | + |
| Sample A7 | Cationic polymerizable color ink 3 | - | F | 0 | - | + |
| Sample A8 | | Cationic polymerizable | 2H | 8 | + | + |
| Sample A9 | | Radical polymerizable | 2H | 4 | + | + |
| Sample A10 | Radical polymerizable color ink 1 | - | H | 0 | - | - |
| Sample A11 | | Cationic polymerizable | 9H | 4 | + | - |
| Sample A12 | | Radical polymerizable | 9H | 0 | - | - |
| Sample A13 | Radical polymerizable color ink 2 | - | B | 0 | - | - |
| Sample A14 | | Cationic polymerizable | F | 4 | + | - |
| Sample A15 | | Radical polymerizable | F | 0 | - | - |
| Sample A16 | Radical polymerizable color ink 3 | - | H | 0 | - | - |
| Sample A17 | | Cationic polymerizable | H | 4 | + | - |
| Sample A18 | | Radical polymerizable | 2H | 0 | - | - |

As shown in Table 1, when the ink-jet recording image-receiving layer formed of the cationic polymerizable composition which is the image-receiving layer composition of the present invention, and the ink layer formed of the cationic polymerizable color ink were used in combination, it was possible to obtain a printed article especially excellent in surface hardness, adhesive property, flexibility and out-gas generation characteristics. On the other hand, when no ink-jet recording image-receiving layer was used, and when the ink-jet recording image-receiving layer formed of the radical polymerizable composition and the ink layer formed of the radical polymerizable color ink were used in combination, it was not possible to obtain a printed article excellent in surface hardness, adhesive property, flexibility and out-gas generation characteristics.

Further, when no ink-jet recording image-receiving layer was used (corresponding to Samples A1, A4, A10, A13 and A16), it was not possible to obtain a printed article excellent in surface hardness, adhesive property and flexibility, possibly because of the following reason. Since the ink contains additive or additives such as pigment other than the major ingredients of the composition of the present invention, a desired curing condition may not have been obtained under the irradiating condition of the ultraviolet light in the experiment (integral light intensity: 1,000mJ/cm²). In the additive used for the ink, a surface treatment is performed to add a basic group on the surface thereon, or the additive contains a component such as dispersing agent or surfactant which itself has a basic group. If such a component was the additive for the ink, these substances with the basic group inhibit the cationic reaction caused by being irradiated with the ultraviolet light. Therefore, the desired curing condition may not be obtained. From these reasons, if the ink for ink-jet recording was directly applied to the substrate, a printed article may be produced, which curing degree is inferior to the printed article having the ink-jet recording image-receiving layer. Especially, in a printed article, when polycarbonate, which adhesive property is inferior to that of the resin coating film, was used as the substrate, the surface hardness, adhesive property and flexibility are inferior to those of a printed article having the ink-jet recording image-receiving layer.

Further, when the ink layer was formed with the radical polymerizable ink (corresponding to Samples A10, A13, A16), the components used in the ink tend to generate the volatile component during reaction. Thus, the results indicate the occurrence of the cloudiness in the other characteristics index, i.e. the out gas generation characteristics. The coating characteristics as described above can be improved by providing an ink-jet recording image-receiving layer on the substrate. However, in the case of the radical polymerizable ink-jet recording image-receiving layer (corresponding to Samples A3, A6, A9, A12, A15 and A18), even if the cationic polyemrizable ink of the present invention was coated thereon (corresponding to Samples A3, A6 and A9), followed by being irradiated with the ultraviolet light, a part of the acid generated during the cationic reaction in the ink layer is neutralized by the substance with basic group in the radical prolymerizable ink-jet image-receiving layer. Consequently, the curing caused by the original reaction does not sufficiently proceed. Therefore, it was not possible to obtain a printed article with excellent characteristics in the each of the indexes such as surface hardness, adhesive property and flexibility. Especially, when the ink layer was formed with the radical polymerizable ink (corresponding to Samples A12, A15 and A18), the out gas generation characteristics was not satisfactory, too.

### EXAMPLE 2 AND COMPARATIVE EXAMPLE 2

Ink-jet recording media were prepared in the same manner as in Example 1 (2) except that the composition of the cationic polymerizable composition was changed as indicated in Table 2. The cationic polymerizable color ink 1 was used for the respective ink-jet recording media to obtain printed articles, and the evaluations 2 and 3 were made on the obtained printed articles, as shown in Table 2.

**Table 2**

| | Epoxy compound (part by weight) | Oxetane Compound (part by weight) | Photocationic polymerization initiator (part by weight) | Adhesion property (evaluation point) | Flexibility |
|---|---|---|---|---|---|
| Sample A19 | 100 | 0 | 0.5 | not cured | - |
| Sample A20 | 20 | 80 | | not cured | - |
| Sample A21 | 1 | 99 | | not cured | - |
| Sample A22 | 0 | 100 | | not cured | - |
| Sample A23 | 100 | 0 | 1 | 8 | + |
| Sample A24 | 20 | 80 | | 8 | + |
| Sample A25 | 1 | 99 | | 8 | + |
| Sample A26 | 0 | 100 | | with tackiness | + |
| Sample A27 | 100 | 0 | 4 | 8 | + |
| Sample A28 | 20 | 80 | | 8 | + |
| Sample A29 | 1 | 99 | | 8 | + |
| Sample A30 | 0 | 100 | | with tackiness | + |
| Sample A31 | 100 | 0 | 10 | 8 | + |
| Sample A32 | 20 | 80 | | 8 | + |
| Sample A33 | 1 | 99 | | 8 | + |
| Sample A34 | 0 | 100 | | with tackiness | + |
| Sample A35 | 100 | 0 | 12 | 8 | + |
| Sample A36 | 20 | 80 | | 8 | + |
| Sample A37 | 1 | 99 | | 8 | + |
| Sample A38 | 0 | 100 | | with tackiness | + |
| Sample A39 | 100 | 0 | 15 | 0 | + |
| Sample A40 | 20 | 80 | | 0 | + |
| Sample A41 | 1 | 99 | | 0 | + |
| Sample A42 | 0 | 100 | | with tackiness | + |

As shown in Table 2, when the content of the photo-cationic polymerization initiator is 1 part by weight to 12 parts by weight with respect to 100 parts by weight of the total amount of the content of the epoxy compound and the oxetane compound, it was possible to obtain a printed article with especially excellent in adhesive property and flexibility.

When the content of the photo-cationic polymerization initiator is 0.5 parts by weight with respect to 100 parts by weight of the total amount of the content of the epoxy compound and the oxetane compound (corresponding to Samples A19, A20, A21 and A22), the content of the photo-cationic polymerization initiator is small with respect to the total amount of the content of the epoxy compound and the oxetane compound which would be polymerized in reaction with the irradiation of the ultraviolet light. Consequently, the amount of the generated acid which contributes to the polymerization reaction is small, thus leaving two compounds uncured. Under this condition, it is not possible to evaluate the flexibility at all. Even if the epoxy compound and the oxetane compound are contained in an appropriate amount, respectively (corresponding to Samples A 20 and A21), there is no difference in the evaluation result in adhesive property and flexibility.

On the other hand, when the content of the photo-cationic polymerization initiator increases as much as 15 parts by weight (corresponding to Samples A39, A40, A41 and A42), it was impossible to obtain a printed article excellent in adhesive property and flexibility, possibly because of the following reason. That is, upon polymerizing the epoxy compound and the oxetane compound, the photo-cationic polymerization initiator, which content exceeds the predetermined amount with respect to the total amount of the content of these compounds, does not contribute to the polymerization reaction. Further, the photo-cationic polymerization initiator itself is comprised of a component which contributes to the polymerization reaction, and of a component which does not contribute to the reaction. Consequently, in this case, the component of the photo-cationic polymerization initiator which did not contribute to the reaction during coating film remains in a large amount. As a result, even if the epoxy compound and the oxetane compound are comprised in an appropriate amount, respectively, it was not possible to obtain a printed article excellent in adhesive property and flexibility.

On the other hand, there is a case in which an excellent result necessarily cannot be obtained, even when the amount of the content of the photo-cationic polymerization initiator is 1 part by weight to 12 parts by weight with which it is easier to obtain a printed article excellent in adhesive property and flexibility. For example, when no epoxy compound is contained and the content of the oxetane compound is 100 parts by weight, the oxetane compound serving as main component has the characteristics of low reactivity (corresponding to Samples A26, A30, A34 and A38). Therefore, it is not possible to obtain sufficient polymerization and crosslinking degree, thus leaving an uncured portion in the products resulted from the reaction. Thus, the tackiness corresponding to sticky feeling is observed. On the contrary, the content of the epoxy compound is 100 parts by weight and no oxetane compound is contained (corresponding to Samples A23, A27, A31 and A35), it is possible to obtain a printed article excellent in adhesive property and flexibility. However, when an attempt is made to form a layer to be observed with the ink-jet system, the viscosity of the composition as described above tends to be too high to perform the film coating with the ink-jet system. Generally, in order to obtain excellent discharge characteristics of the composition with the ink-jet system, it is required that the viscosity of the composition is not more than several 10 cps, preferably not more than 30 cps. However, by adjusting the content of the epoxy compound to be 100 parts by weight, the viscosity of the composition becomes greater than the viscosity as described above. Incidentally, when the ink-jet system is not used as a coating method for the obtained composition, the composition is usable since both adhesive property and flexibility thereof are excellent.

### EXAMPLE 3 AND COMPARATIVE EXAMPLE 3

### (1) Preparation of the overcoat layer composition

Cationic polymerizable compositions as the overcoat layer composition of the present invention are prepared. Also, radical polymerizable compositions, which were conventionally used as the conventional overcoat layer composition, were prepared for purpose of comparison.

### Overcoat layer composition 1

A cationic polymerizable composition, as the overcoat layer composition 1, was obtained by mixing and agitating, at room temperature in a dark room, an alicyclic epoxy compound, i.e., 20 parts by weight of 3,4-epoxycyclohexylmethyl-3',4'-epoxycyclohexane carboxylate (trade name: UVR-6110, produced by Union Carbide Corporation), an oxetane compound, i.e., 80 parts by weight of bis(3-ethyl-3-oxetanylmethyl) ether (trade name: OXT-221, produced by Toagosei Co., Ltd.), and a photo-cationic polymerization initiator, i.e., 4 parts by weight of a mixture of triarylsulfonium hexafluorophosphate salts and propylene carbonate (trade name: UVI-6990, produced by Union Carbide Corporation, active ingredient: 50 %).

### Overcoat layer composition 2

A cationic polymerizable composition, as the overcoat layer composition 2, was obtained by mixing and agitating, at room temperature in a dark room, a bisphenol-A-type epoxy compound, i.e. 20 parts by weight of a mixture of bisphenol-A type liquid epoxy resin (trade name: EpiCoat 819, produced by Yuka Shell Epoxy Co. Ltd.), an oxetane compound, i.e., 80 parts by weight of bis(3-ethyl-3-oxetanylmethyl) ether (trade name: OXT-221, produced by Toagosei Co., Ltd.), and a photo-cationic polymerization initiator, i.e., 4 parts by weight of a mixture of triarylsulfonium hexafluorophosphate salts and propylene carbonate (trade name: UVI-6990, produced by Union Carbide Corporation, active ingredient: 50 %).

### Overcoat layer composition 3

A photo-cationic polymerizable composition, as the overcoat layer composition 3, was obtained by mixing and agitating, at room temperature in a dark room, an alicyclic epoxy compound, i.e., 20 parts by weight of 3,4-epoxycyclohexylmethyl-3',4'-epoxycyclohexane carboxylate (trade name: UVR-6110, produced by Union Carbide Corporation), an oxetane compound, i.e. 80 parts by weight of 3-ethyl-3-hydroxymethyloxetane (trade name: OXT-101, produced by Toagosei Co., Ltd.), and a photo-cationic polymerization initiator, i.e., 4 parts by weight of a mixture of triarylsulfonium hexafluorophosphate salts and propylene carbonate (trade name: UVI-6990, produced by Union Carbide Corporation, active ingredient: 50 %) .

### Overcoat layer composition 4

A radical polymerizable composition, as the overcoat layer composition 4, was obtained by mixing and agitating, at room temperature in a dark room, an acrylic compound, i.e., 20 parts by weight of acryloyl morpholine (trade name: ACMO, produced by Kohjin Co., Ltd.), 80 parts by weight of polyester acrylate (trade name: M-8530 manufactured by Toagosei Co., Ltd.), and a radical polymerization initiator, i.e., 4 parts by weight of 2-benzil-dimethylamino-1-(4-morpholinophenyl)-butanone-1 (trade name: IRGACURE369, manufactured by Ciba Specialty Chemicals Inc.), and a sensitizer, i.e., 1 part by weight of 2, 4, 6, N, N-penthamethylaniline (manufactured by Aldrich).

### (2) Preparation of Ink for Ink-jet Recording

The cationic polymerizable color inks 1, 2, 3 and the radical polymerizable color inks 1, 2, 3 prepared in Example 1 were used as black ink, cyan ink and magenta ink, respectively. As yellow ink, a cationic polymerizable color ink 4 and a radical polymerizable color ink 4 were prepared as described below, respectively. Each of the prepared inks had a viscosity of not more than 30 cps, which is preferably usable as the ink for ink-jet recording.

### Cationic polymerizable Color Ink 4

A cationic polymerizable color ink 4 was obtained by mixing and agitating an epoxy compound, i.e., 10 parts by weight of 3,4-epoxycyclohexylmethyl-3',4'-epoxycyclohexane carboxylate (trade name: UVR-6110, produced by Union Carbide Corporation), 20 parts by weight of limonene dioxide (manufacture by Elf Atochem), an oxetane compound, i.e., 70 parts by weight of bis(3-ethyl-3-oxetanylmethyl) ether (trade name: OXT-221, produced by Toagosei Co., Ltd.), a photo-cationic polymerization initiator, i.e., 4 parts by weight of a mixture of triarylsulfonium hexafluorophosphate salts and propylene carbonate (trade name: UVI-6990, produced by Union Carbide Corporation, active ingredient: 50 %), and a pigment, i.e. 3 parts by weight of Pigment Yellow 139.

### Radical polymerizable Color Ink 4

A radical polymerizable color ink 4 was obtained by mixing and agitating an acrylic compound, i.e., 20 parts by weight of acryloyl morpholine (trade name: ACMO, produced by Kohjin Co., Ltd.), 80 parts by weight of polyester acrylate (trade name: M-8530 manufactured by Toagosei Co., Ltd.), and a radical polymerization initiator, i.e., 4 parts by weight of 2-benzil-dimethylamino-1-(4-morpholinophenyl)-butanone-1 (trade name: IRGACURE369, manufactured by Ciba Specialty Chemicals Inc.), a sensitizer, i.e., 1 part by weight of 2, 4, 6, N, N-penthamethylaniline (manufactured by Aldrich), and a pigment, i.e. 3 parts by weight of Pigment Yellow 139.

### (3) Forming of Ink Layer

An ink layer was formed by discharging the cationic polymerizable color inks 1 to 4 and the radical polymerizable color inks 1 to 4, respectively, onto a plate formed of polycarbonate having the thickness of 100 µm, with an ink-jet printer as described later (manufactured by Brother Kogyo Kabushiki Kaisha) at a pixel density of 600 dpi, followed by being cured with a spot ultraviolet light irradiating apparatus (model name: SP5-250DB manufactured by Ushio Inc.) provided on the side of a printer head of the ink-jet printer. Thus, an ink layer, which constitutes a printed pattern (an image data from Standard Color Image Data (SCID) of the Japanese Standard Association), was formed.

### (4) Forming of Overcoat Printed Article

A printed article having an overcoat layer formed hereon was obtained by coating the compositions for overcoat layer 1 to 4, respectively, with a wire bar corder, onto the ink layer so that the coating thickness was 15 µm, and then the composition was cured by passing the composition through once a conveyer type ultraviolet light-irradiating apparatus Eye Grandage ECS-401GX (lamp output: 3.0 kW, integral light intensity: 1,000mJ/cm², produced by Eye Graphics Co., Ltd.). The apparatus is provided with a super high voltage mercury lamp of 120 W/cm. The obtained printed articles (Samples B1 to B10) were evaluated on the basis of the following criteria. Results of the respective evaluations are summarized in Table 3.

### (5) Evaluation

### 1: Granularity

Regarding the granularity of the ink layer, a test piece (printed article) was measured with a spectro-densitometer (model name: X-Rite 938, produced by X-Rite, Inc.) to visually evaluate Portion A which reflection density exhibits approximately 0.1 and Portion B which reflection density exhibits approximately 0.8, on the basis of following criteria:
Level 4: no granularity was observed both in Portion A and Portion B.
Level 3: the granularity was slightly observed in Portion A.
Level 2: the granularity was clearly observed in Portion A (looks grained).
Level 1: the granularity was clearly observed both in Portion A and Portion B (looks grained).

Incidentally, in the criteria as described above, Level 3 and Level 4 were determined to be a usable level for practical use.

### 2: Moisture Resistance

The obtained printed articles each having the overcoat layer formed thereon, were placed in an environment of 60 °C, 95% RH for 300 hours. Then, the outer appearance of the coating film was visually observed. "++": transparent. "±": slightly clouded. "-": whitely clouded.

Since some coating films were not sufficiently cured to leave uncured portion therein, the stickiness was also determined by finger-touching the coating film surface. When the stickiness was confirmed on the coating, the test result indicated "with tackiness".

### 3: Out-gas Generation Characteristics

Each of the printed articles was placed on a hot plate heated to 110 °C, and was covered with a glass vessel arranged thereon. The cloudiness in the glass vessel, which possibly appeared after being left to stand for 24 hours, was visually confirmed. The printed article with no cloudiness was indicated by "+", the printed article with slight cloudiness was indicated by "±", and the printed article with conspicuous cloudiness was indicated by "-".

**Table 3**

| | Ink Layer | Overcoat Layer | Granularity | Moisture Resistance | Out-gas generation characteristics |
|---|---|---|---|---|---|
| Sample B1 | Cationic polyemrizable color ink | - | 2 | ± | + |
| Sample B2 | | Composition 1 | 4 | + | + |
| Sample B3 | | Composition 2 | 4 | - | - |
| Sample B4 | | Composition 3 | 4 | + | + |
| Sample B5 | | Composition 4 | 4 | - | - |
| Sample B6 | Radical polyemrizable color ink | - | 2 | - | - |
| Sample B7 | | Composition 1 | 4 | + | + |
| Sample B8 | | Composition 2 | 4 | - | - |
| Sample B9 | | Composition 3 | 4 | + | + |
| Sample B10 | | Composition 4 | 4 | ± | - |

As shown in Table 3, by performing the overcoating process, it was possible to reduce the granularity which is inherently appeared in the ink-jet printing. Further, when the overcoat layer formed of the cationic polymerizable composition as the overcoat layer composition of the present invention was used, it was possible to obtain a printed article with less granularity and with excellent moisture resistance and-out-gas generation characteristics. In view of the evaluation index discussed above, namely, the granularity, moisture resistance and out-gas generation characteristics, the overcoat layer is effective regardless of the kind of ink layer. However, when the adhesive property of coating film as an index determining superiority of a printed article is considered in addition to these indices, it is possible to obtain an especially excellent printed article by forming also the ink layer with the cationic polymerizable ink. Incidentally, when the radical polymerizable composition was used as the overcoat layer (corresponding to Samples B5 and B10), although it is possible to obtain an printed article excellent in granularity, but it is not possible to obtain a printed article excellent in moisture resistance and out-gas generation characteristics. Even when the cationic polymerizable composition was used as the overcoat layer, in some cases it may be not possible to obtain a printed article excellent in moisture resistance and out-gas generation characteristics (corresponds to Samples B3 and B8). This is because the epoxy compound formed of the overcoat layer composition contains bisphenol-A type epoxy compound which is not an alicyclic epoxy compound, so that a sufficient crosslinking degree can not be obtained with the irradiation energy of ultraviolet light given in the examples. By giving the irradiation enery greater than the energy in the examples, it is possible to improve the moisture resistance and out-gas generation characteristics and to obtain an printed article with same excellence as in the case in which the alicyclic epoxy compound was used.

### EXAMPLE 4 AND COMPARATIVE EXAMPLE 4

Printed articles were prepared with the cationic polymerizable color ink 1 in the same manner as in Example (3) and Comparative Example (3) except that the composition of the cationic polymerizable composition, as the overcoat layer composition, was changed as indicated in Table 4. The evaluation 2 (Moisture Resistance) was made on the obtained printed articles, as shown in the Table 4.

**Table 4**

| | Epoxy compound UVR-6110 (part by weight) | Oxetane Compound OXT-221 (part by weight) | Photocationic polymerization initiator UVI-6990 (part by weight) | Moisture Resistance |
|---|---|---|---|---|
| Sample B11 | 100 | 0 | 0.5 | Not cured |
| Sample B12 | 20 | 80 | | Not cure |
| Sample B13 | 1 | 99 | | Not cured |
| Sample B14 | 0 | 100 | | Not cured |
| Sample B15 | 100 | 0 | 1 | + |
| Sample B16 | 20 | 80 | | + |
| Sample B17 | 1 | 99 | | + |
| Sample B18 | 0 | 100 | | With tackiness |
| Sample B19 | 100 | 0 | 4 | + |
| Sample B20 | 20 | 80 | | + |
| Sample B21 | 1 | 99 | | + |
| Sample B22 | 0 | 100 | | With tackiness |
| Sample B23 | 100 | 0 | 10 | + |
| Sample B24 | 20 | 80 | | + |
| Sample B25 | 1 | 99 | | + |
| Sample B26 | 0 | 100 | | With tackiness |
| Sample B27 | 100 | 0 | 12 | + |
| Sample B28 | 20 | 80 | | + |
| Sample B29 | 1 | 99 | | + |
| Sample B30 | 0 | 100 | | With tackiness |
| Sample B31 | 100 | 0 | 15 | + |
| Sample B32 | 20 | 80 | | + |
| Sample B33 | 1 | 99 | | + |
| Sample B34 | 0 | 100 | | With tackiness |

As shown in Table 4, when the content of the photo-cationic polymerization initiator as described above is 1 part by weight to 12 parts by weight with respect to 100 parts by weight of the total content of the epoxy compound and the oxetane compound as described above, it was possible to obtain a printed article especially excellent in adhesive property. In this case, when the content of the photo-cationic polymerization initiator is as less as 0.5 parts by weight (corresponding to Samples B11 to B14), the absolute content of the photo-cationic polymerization initiator is small even if the epoxy compound and the oxetane compound, which would be polymerized in reaction with the ultraviolet light, were contained in appropriate amount, respectively (corresponding to Samples B12 and B13). Consequently, the amount of the generated acid which contributes to the polymerization reaction is also small, thus leaving these two compounds in an uncured condition.

Also, when no epoxy compound is contained and the content of the oxetane compound is 100 parts by weight (corresponding to Samples B14, B18, B22, B26, B30 and B34), it is not possible to obtain sufficient crosslinking degree, thus leaving an uncured portion in the product resulted from the reaction. Thus, the tackiness corresponding to sticky feeling is observed. On the other hand, the content of the epoxy compound is 100 parts by weight and no oxetane compound is contained (corresponding to Samples B11, B15, B19, B23, B27 and B31), it is possible to obtain a printed article excellent in adhesive property which is same with the case in which the epoxy compound and the oxetane compound were contained in appropriate amount. However, when an attempt is made to form the overcoat layer with the ink-jet system in the same manner to form the ink layer, the viscosity increases as much as exceeding several 10 cps when 100 parts by weight of the epoxy compound is contained. Thus, it is not possible to form the overcoat layer with the ink-jet system. In order to perform the film coating in the ink-jet system, it is necessary to contain the oxetane compound in the composition.

An embodiment of an ink jet printer as an ink discharging apparatus in accordance with the invention will be described as below with reference to the accompanying drawings.

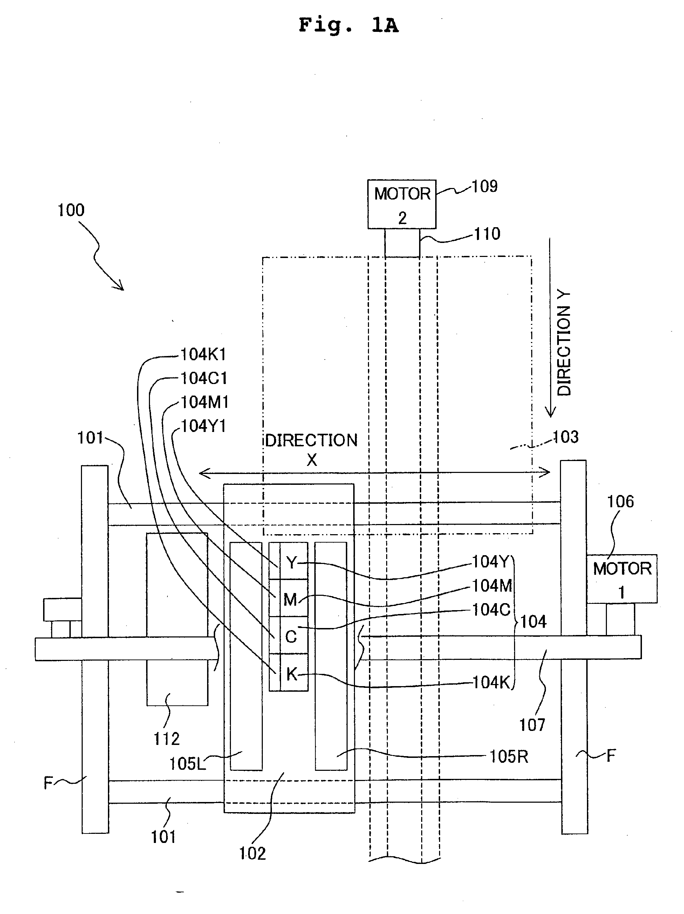

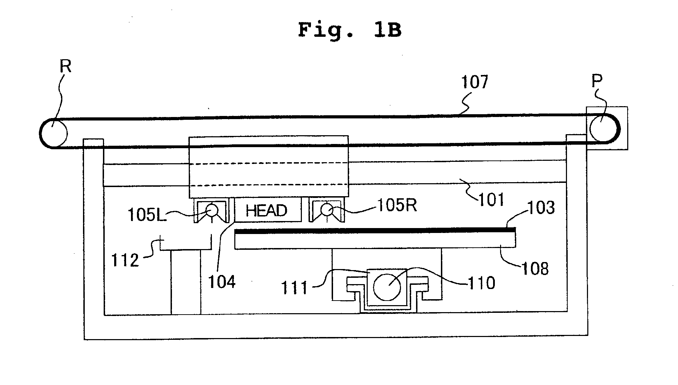

Embodiments of the invention will be described with reference to the accompanying drawings. As shown in FIG. 1, a color ink jet printer 100 of a first embodiment includes a carriage 102 that can move in a main scanning direction (an X-axis direction) while guided by X-axis guide bars 101, 101 fixed to a frame F. A print head 104 as an ink discharging head and ultraviolet (UV) lamps 105L, 105R are provided on the carriage 102. The print head 104 includes a Y head 104Y for yellow (Y) ink, an M head 104M for magenta (M) ink, a C head 104C for cyan (C) ink and a K head 104K for black (K) ink. The ink to be ejected from the heads 104Y, 104M, 104C, 104K is an ultraviolet curing type ink (UV ink). The ink prepared in the above examples can be used for the yellow, magenta, cyan and black inks. The heads 104Y, 104M, 104C and 104K are aligned in a sub scanning direction (a Y-axis direction), which is perpendicular to the main scanning direction, on the carriage 102. The UV lamps 105L, 105R are provided on right and left sides of the print head 104 so as to sandwich the print head 104 therebetween.

The UV lamps 105L, 105R irradiate the UV ink, ejected from the respective ink heads onto a recording medium 103, with ultraviolet light to increase its viscosity to cure the ink.

Each of the heads 104Y, 104M, 104C, 104K is formed with a plurality of nozzles, which face a platen 108 (described later) and are basically aligned in parallel to the sub scanning direction. The Y head 104Y, the M head 104M, the C head 104C and the K head 104K are connected with an yellow ink tank 104Y1 containing UV yellow ink, a magenta ink tank 104M1 containing UV magenta ink, a cyan ink tank 104C1 containing UV cyan ink, a black ink tank 104K1 containing UV black ink, respectively. Each UV ink is supplied from the respective ink tanks 104Y1, 104M1, 104C1, 104K1 to the respective nozzles through each ink flow path in the respective heads 104Y, 104M, 104C, 104K. Therefore, when one-line printing is performed by ejecting ink droplets of the UV ink from each head 104Y, 104M, 104C, 104K while the carriage 102 is moved in the main scanning direction, a printed portion is formed on the recording medium 103. A width of the printed portion is equal to a carriage traveling distance in the main scanning direction. A length of the printed portion is equal to a width of ink ejection from each head (a width of ink ejection from the nozzles in each head at a time).

An X-axis motor 106 that moves the carriage 102 in the sub scanning direction is attached to one of side walls the frame F. A driven pulley R is rotatably provided to the other side wall of the frame F. A timing belt 107 is stretched between the driven pulley R and a drive pulley P fixed to an output shaft of the X-axis motor 106. The timing belt 107 is engaged with the carriage 102. Thus, as the X-axis motor 106 is driven, the carriage 102 travels from side to side along the X-axis guide bars 101, 101, that is, the X-axis guide bars 101, 101 and the X-axis motor 106 moves the carriage 102 in the main scanning direction with respect to the recording medium 103. The platen 108 is supported by the frame F, under the carriage 102 and the X-axis guide bars 101, 101 so as to be movable in the sub scanning direction perpendicular to the main scanning direction. The platen 108 is formed with a plurality of air-intakes at its top, and a recording medium 103, such as a plastic plate, is placed on the top. Air is taken in from the air-intakes with the recording medium 103 placed on the top (a surface for placing the recording medium 103), so that a negative pressure is generated and thus the recording medium 103 is statically held on the platen 108. As described above, the platen 108 is provided with an air taking mechanism for holding the recording medium 103. The air taking mechanism also functions as a holding device for holding the recording medium 103. The holding device is not limited to the air taking mechanism. However, various types of holding devices can be adopted. For example, a clamp mechanism that mechanically presses and holds the recording medium 103 on the platen 108 can be adopted.

A screw shaft 110, extending in a direction perpendicular to the main scanning direction, is rotatably supported by the frame F. One end of the screw shaft 110 is secured to an output shaft of a Y-axis motor 109. A bearing 111, into which the screw shaft 110 is threaded, is fixed under the platen 108. As the screw shaft 110 is rotated by the Y-axis motor 109, the platen 108 is moved in the sub scanning direction. A screw mechanism having the screw shaft 110, the bearing 111 and the Y-axis motor 109 moves the platen 108 in the sub scanning direction with respect to the carriage 102.

The amount and direction of travel of the carriage 102 is controlled by controlling the amount and direction of rotation of the X-axis motor 106. For example, a pulse motor is preferably used as the X-axis motor 106. The amount and direction of travel of the platen 108 is controlled by controlling the amount and direction of rotation of the Y-axis motor 109. For example, a pulse motor is preferably used as the Y-axis motor 109.

An area 112 is a maintenance area in which purging, wiping, flushing and the like are performed. As shown in FIG. 1A, the UV lamps 105L, 105R are longer than the print head 104 in a direction of feeding the recording medium 103 by a predetermined length.

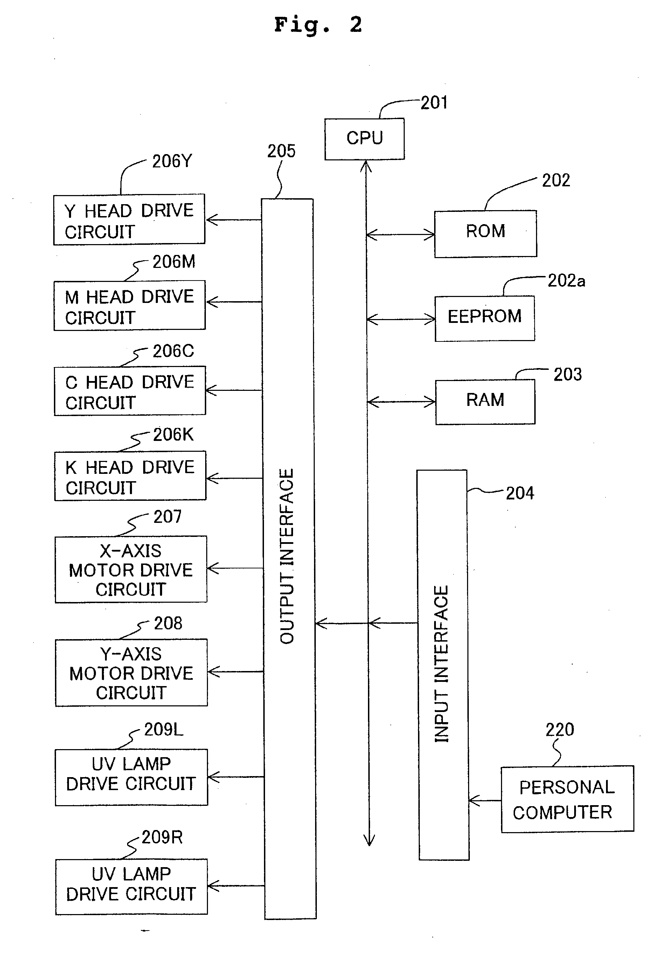

As shown in FIG. 2, a control system of the color ink jet printer 100 includes a CPU 201, a ROM 202, an EEPROM 202a, a RAM 203, an input interface 204 and an output interface 205. The output interface 205 is connected with a Y head drive circuit 206Y, an M head drive circuit 206M, a C head drive circuit 206C, a K head drive circuit 206K, an X-axis motor drive circuit 207, a Y-axis motor drive circuit 208 and UV lamp drive circuits 209L, 209R. A control signal and data from a personal computer 220 are inputted to the input interface 204.

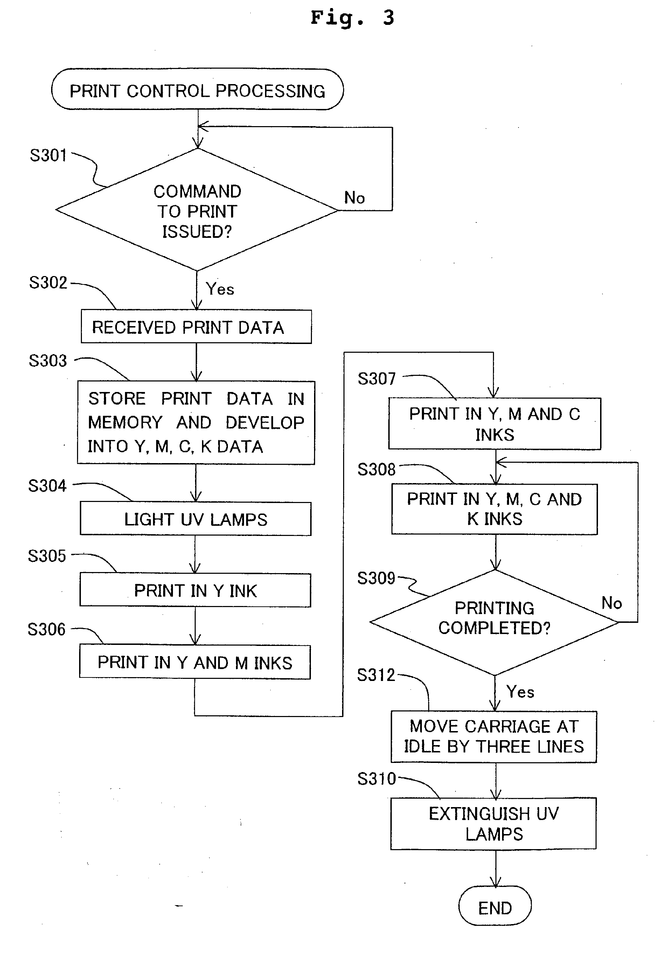

FIG. 3 is a flowchart for performing print control processing. At first, the CPU 201 determines whether a command to start printing has been issued from the personal computer 220 (S301). When the CPU 201 determines that the command to start printing has been issued (S301:YES), the CPU 201 receives print data (S302). After the CPU 201 receives a page of print data, the CPU 201 stores the print data in the RAM 203 and develops the print data into one page of data of each color of Y, M, C, K (S303). Then, the CPU 201 lights the UV lamps 105L, 105R (S304). After that, based on the Y data, while outputting one line of dot data to the Y head drive circuit 206Y, the CPU 201 performs one-line printing in the UV yellow ink by moving the carriage 102 in the main scanning direction (S305).

One-line printing is performed as described below. A print data developing area for one page is provided according to color in the RAM 203. One page of dot data is developed into each print data developing area in the bitmap format in which dots are aligned in the main scanning direction and in the sub scanning direction. Each dot in the dot data represents ejection (nonejection) of an ink droplet from one nozzle. One-line printing of dot data is that dots equal to the number of nozzles aligned in the sub scanning direction are selected in the sub scanning direction and rows of the selected dots are aligned in the main scanning direction from a print start side to a print end side. Dots equal to the number of nozzles aligned in the sub scanning direction are selected and referred to as dot rows. While the dot rows are sequentially read from the print data developing area from the print start side to the print end side and supplied to each heads 104Y, 104M, 104C, 104K, the print head 104 is moved in the main scanning direction, thereby one line of a printed portion is formed on a recording medium 103. Upon performing the printing, a printed portion is irradiated with ultraviolet light by the UV lamps 105L, 105R disposed adjacent to the print head 104 to increase its viscosity.

Next, the CPU 201 moves the platen 108 in the sub scanning direction by one line (by the width of the ink ejection from the print head 104). Then, while outputting each one line of the dot data to the respective Y and M head drive circuits 206Y and 206M based on each Y and M data, respectively, the CPU 201 performs one-line printing in each of the UV yellow ink and the UV magenta ink by moving the carriage 102 in the main scanning direction (S306).

That is, at S305, one-line printing of the first line of the Y data has been performed. Therefore, next, dot data of the Y data for a second line is selected and provided to the Y head drive circuit 206Y and dot data of the M data for a first line is selected and provided to the M head drive circuit 206M. In other words, ink droplets of the UV magenta ink to be ejected according to the M data are ejected on the first line of the UV yellow ink ejected at S305. However, the viscosity of the UV yellow ink ejected prior to the ejection of the UV magenta ink has already been increased by the irradiation by the UV lamps 105L, 105R, so that the UV yellow ink and the UV magenta ink do not intermix and clarity of the ink colors is not degraded. Upon performing the printing in each of the UV yellow ink and the UV magenta ink, the UV yellow ink and the UV magenta ink ejected at S306 are irradiated with ultraviolet light by the UV lamps 105L, 105R to increase their viscosity.

Next, the CPU 201 moves the platen 108 in the sub scanning direction by one line. Then, while outputting each one line of the dot data to the respective Y, M and C head drive circuits 206Y, 206M and 206C based on each Y, M and C data, respectively, the CPU 201 performs one-line printing in each of the UV yellow ink, the UV magenta ink and the UV cyan ink by moving the carriage 102 in the main scanning direction (S307).

That is, dot data of the Y data for a third line, dot data of the M data for a second line and dot data of the C data for a first line are selected and supplied to the Y head drive circuit 206Y, the M head drive circuit 206M and the C head drive circuit 206C, respectively. In other words, ink droplets of the UV cyan ink to be ejected according to the C data are ejected on the first line of the UV magenta ink ejected at S306. However, the viscosity of the UV magenta ink has already been increased by the irradiation by the UV lamps 105L, 105R, so that the UV magenta ink and the UV cyan ink do not intermix and clarity of the ink colors is not degraded. In short, the first line of the UV magenta ink is ejected over the first line of the UV yellow ink, and the first line of the UV cyan ink is ejected over the first line of the UV magenta ink. One-line printing according to the M and Y data is also performed in the same manner described above.

Next, the CPU 201 moves the platen 108 in the sub scanning direction by one line. Then, while outputting each one line of the dot data to the respective Y, M, C and K head drive circuits 206Y, 206M, 206C and 206K based on each Y, M, C and K data, respectively, the CPU 201 performs one-line printing in each of the UV yellow ink, the UV magenta ink, the UV cyan ink and the UV black ink by moving the carriage 102 in the main scanning direction. (S308).

That is, dot data of the Y data for a fourth line, dot data of the M data for a third line, dot data of the C data for a second line and dot data of the K data for a first line are selected and supplied to the Y head drive circuit 206Y, the M head drive circuit 206M, the C head drive circuit 206C and the K head drive circuit 206K, respectively. At S308, if the K data to be read is dot data for a Nth line (N is a whole number), the Y dot data is dot date for N + 3th line, the M data is dot data for N + 2th line and the C data is dot data for N +1th line. If the CPU 201 makes a determination in the negative at S309 described later, the CPU 201 sequentially increments N and reads dot data. The ejected ink droplets are irradiated with the ultraviolet light to increase their viscosity immediately after the ink droplets are ejected.

Then, the CPU 201 determines whether all printing has completed (S309). If the printing has not completed yet (S309:NO), dot data of each of the Y, M, C and K data for a next line is read and printing is performed according to the data at S308 until the printing is completed.

The repetition of the one-line printing and the transport of the platen 108 will make the printing operation reach a last line in order of the Y head 104Y, the M head 104M, the C head 104C and the K head 104K. When dot data that is to be used for printing is not left as to all the heads 104Y, 104M, 104C, 104K, the CPU 201 determines that the printing has completed. At S308, dot data of each color is read. At that time, if dot data of each color has already been used for printing in a last line, the CPU 201 outputs dot data that means nonejection of ink as to the dot data of each color.

When the CPU 201 determines that the printing has completed (S309:YES), the CPU 201 moves the carriage 102 at idle by three lines without ejecting ink droplets from the heads 104Y, 104M, 104C, 104K (S312). The UV black ink ejected last is irradiated with the ultraviolet light for the time of the one-line printing at the moment. That is, the irradiation time of the ultraviolet light to the last printed portion in the UV black ink is shorter than that to the other printed portion, so that the carriage 102 is moved at idle to irradiate the ultraviolet light to cover a shortfall. That is, the UV yellow ink is irradiated with ultraviolet light three times before the UV black ink is ejected, the UV magenta ink is irradiated twice before the UV black ink is ejected, and the UV cyan ink is irradiated once before the UV black ink is ejected. Therefore, if the irradiation of the ultraviolet light is finished when the ejection of the UV black ink in the last line is completed, the irradiation amount of the ultraviolet light to the area of three lines from the last printed line is less than that to the other portions. Due to lack of the irradiation, the viscosity of the UV black ink ejected in the last line may not be sufficiently increased or the ink may not be sufficiently cured. To avoid this, the carriage 102 is moved at idle the number of times that is one less than the number of heads to average the time of the irradiation of the ultraviolet light. By doing so, the inks ejected onto the recording medium 103 are equally cured. After that, the CPU 201 extinguishes the UV lamps 105L, 105R (S310), and thus this processing has completed.

According to the color ink jet printer 100 used in the embodiment, the UV lamps 105L, 105R are mounted on the carriage 102 to be placed front and/or behind of the heads 104Y, 104M, 104C, 104K in the main scanning direction. Thus, cure of ink can be performed in parallel with ink ejection from each heads 104Y, 104M, 104C, 104K. The color ink jet printer 100 does not become large in size, and the time required for printing can be shortened. Further, the colors of the printing can be clearly represented.

The UV lamps 105L, 105R are longer than the heads 104Y, 104M, 104C, 104K in the sub scanning direction, so that cure of ink can be performed with respect to all heads 104Y, 104M, 104C, 104K at a time in parallel with ink ejection from the heads 104Y, 104M, 104C, 104K. Further, the substantially same amount of energy can be irradiated to each color of ink on a recording medium 103, so that the ink can be evenly cured.

The image-receiving layer composition or the overcoat layer composition prepared in the above examples can be also ejected by the printer head 104 of the printer 100.

According to the present invention, it is possible to provide the image-receiving layer composition for forming an ink-jet recording image-receiving layer which firmly fixes the ink layer without generating out-gas which causes the appearance of the odor and the attachment of the volatile component to the surroundings, thereby providing a printed article excellent in surface hardness, adhesiveness and flexibility; and the recording medium having the ink-jet recording image-receiving layer formed thereon.

Further, since the overcoat layer composition of the present invention is a cationic polymerizable composition, it is possible to form an overcoat layer having superior moisture resistance and adhesive property than that of the conventional overcoat layer composition containing the radical polymerizable composition. Also, when an ink layer is formed with the ink for ink-jet recording containing the cationic polymerizable composition with excellent adhesive property, an overcoat layer formed with the radical polymerizable composition may be curved when being cured. However, when the overcoat layer is formed with the overcoat layer composition of the present invention containing the cationic polymerizable composition, the overcoat layer is not curved when being cured.

The present invention can reduce the granularity in the printed article printed with ink-jet system, and provide the overcoat layer composition which firmly fixes the ink layer without generating out-gas which causes the appearance of the odor and the attachment of the volatile component to the surroundings, thereby providing a printed article excellent in moisture resistance, surface hardness, adhesive property and flexibility; and the printed article having the overcoat layer formed thereon.

## Claims

1. An image-receiving layer composition for forming an image-receiving layer on a substrate of a recording medium used to form an image by an ink-jet recording method, comprising:
an epoxy compound;
an oxetane compound; and
a photo-cationic polymerization initiator,
wherein the image-receiving layer composition is curable with an active energy beam.

2. The image-receiving layer composition according to claim 1, wherein the epoxy compound is an alicyclic epoxy compound.

3. The image-receiving layer composition according to claim 1, wherein the oxetane compound has two or more oxetane rings.

4. The image-receiving layer composition according to claim 1, wherein the epoxy compound is 3,4-epoxycyclohexylmethyl-3',4'-epoxycyclohexane carboxylate; the oxetane compound is bis(3-ethyl-3-oxetanylmethyl)ether; and the photo-cationic polymerization initiator is a mixture of triarylsulfonium hexafluorophosphate salts and propylene carbonate.

5. The image-receiving layer composition according to claim 1, wherein a content of the photo-cationic polymerization initiator is 1 part by weight to 12 parts by weight with respect to 100 parts by weight of a total content of the epoxy compound and the oxetane compound; and a content of the epoxy compound is not less than 1 part by weight with respect to 100 parts by weight of the image-receiving layer composition.

6. An ink-jet recording medium comprising:
a substrate; and
an image-receiving layer applied on a surface of the substrate and formed with the image-receiving layer composition defined in claim 1.

7. A printed article comprising:
the ink-jet recording medium defined in claim 6; and
an active energy beam-curable ink which comprises an epoxy compound, an oxetane compound and a photo-cationic polymerization compound, and which is applied on the image-receiving layer of the ink-jet recording medium.

8. The printed article according to claim 7, wherein the epoxy compound in the ink is an alicyclic epoxy compound.

9. The printed article according to claim 7, wherein the oxetane compound in the ink has two or more oxetane rings.

10. The printed article according to claim 7, wherein the epoxy compound in the ink is 3,4-epoxycyclohexylmethyl-3',4'-epoxycyclohexane carboxylate; the oxetane compound in the ink is bis(3-ethyl-3-oxetanylmethyl) ether; and the photo-cationic polymerization initiator in the ink is a mixture of triarylsulfonium hexafluorophosphate salts and propylene carbonate.

11. The printed article according to claim 7, further comprising an overcoat layer provided on the image-receiving layer having the ink applied thereon,
wherein the overcoat layer is formed of an active energy beam-curable composition comprising an epoxy compound, an oxetane compound and a photo-cationic polymerization initiator.

12. The printed article according to claim 11, wherein the epoxy compound in the overcoat layer is an alicyclic epoxy compound.

13. The printed article according to claim 11, wherein the oxetane compound in the overcoat layer has two or more oxetane rings.

14. The printed article according to claim 11, wherein the epoxy compound in the overcoat layer is 3,4-epoxycyclohexylmethyl-3',4'-epoxycyclohexane carboxylate; the oxetane compound in the overcoat layer is bis(3-ethyl-3-oxetanylmethyl) ether; and the photo-cationic polymerization initiator in the overcoat layer is a mixture of triarylsulfonium hexafluorophosphate salts and propylene carbonate.

15. The printed article according to claim 11, wherein the substrate is formed of polycarbonate.

16. An overcoat layer composition for forming an overcoat layer on an ink layer applied by an ink-jet recording method on a recording medium, comprising:
an epoxy compound;
an oxetane compound; and
a photo-cationic polymerization initiator,
wherein the overcoat layer is curable with an active energy beam.

17. The overcoat layer composition according to claim 16, wherein the epoxy compound is an alicyclic epoxy compound.

18. The overcoat layer composition according to claim 16, wherein the oxetane compound has two or more oxetane rings.

19. The overcoat layer composition according to claim 16, wherein the epoxy compound is 3,4-epoxycyclohexylmethyl-3',4'-epoxycyclohexane carboxylate; the oxetane compound is bis(3-ethyl-3-oxetanylmethyl) ether; and the photo-cationic polymerization initiator is a mixture of triarylsulfonium hexafluorophosphate salts and propylene carbonate.

20. The overcoat layer composition according to claim 16, wherein a content of the photo-cationic polymerization initiator is 1 part by weight to 12 parts by weight with respect to 100 parts by weight of a total content of the epoxy compound and the oxetane compound; and a content of the epoxy compound is not less than 1 part by weight with respect to 100 parts by weight of the overcoat layer composition.

21. A printed article comprising:
a recording medium;
an ink layer formed on the recording medium; and
the overcoat layer composition defined in claim 16, which has been applied on a surface of the ink layer.

22. The printed article according to claim 21, wherein the ink comprises an epoxy compound, an oxetane compound, and a photo-cationic polymerization initiator, and the ink is curable with an active energy beam.

23. The printed article according to claim 21, wherein the recording medium comprises a substrate formed of polycarbonate.
